# EUROPEAN PATENT SPECIFICATION

(11) **EP 1 826 439 B1**
(45) Date of publication and mention of the grant of the patent: **10.12.2008**
(21) Application number: 06025732.6
(22) Date of filing: 12.12.2006
(51) Int. Cl.: F16D 48/06, B60W 10/02

(54) **Automatic clutch control method and device**
Automatisches Kupplungssteuerungssystem und -verfahren
Méthode et système de commande d'embrayage

(30) Priority: 18.04.2006 JP 2006114703; 24.02.2006 JP 2006048086
(43) Date of publication of application: 29.08.2007
(73) Proprietor: Yamaha Hatsudoki Kabushiki Kaisha, Iwata-shi, Shizuoka 438-8501 (JP)
(72) Inventor: Minami, Kengo, Iwata-shi Shizuoka-ken 438-8501 (JP); Takeuchi, Yoshihiko, Iwata-shi Shizuoka-ken 438-8501 (JP)
(74) Representative: Grünecker, Kinkeldey, Stockmair & Schwanhäusser Anwaltssozietät

(56) References cited:
- EP-A1- 0 585 817
- WO-A-98/46446
- DE-A1- 10 107 962
- DE-A1- 10 327 438
- DE-A1- 19 837 816
- GB-A- 2 245 043
- JP-A- 58 061 350
- US-A- 4 898 049
- US-B1- 6 502 681
- US-H1- H2 031

## Description

The invention relates to a method to automatically control a power transmission of a vehicle, in particular of a saddle-riding type vehicle according to the preamble of independent claim 1 and an automatic gearshift control device according to the preamble of independent claim 8.

Such a method and such a device can be taken from the prior art document US 6,502,681 B1. Said document teaches a clutch connection control system capable of shortening a time required for clutch connection, preventing the degradation of riding comfort upon clutch connection, and ensuring good operability. A separation distance, that is, a shift amount of a clutch driven side from a clutch drive side is controlled by a clutch release mechanism driven by a drive motor. A drive side turning speed detecting portion detects a turning speed of the drive side. A driven side turning speed detecting portion detects a turning speed of the driven side. A turning speed difference detecting portion detects a difference between the detected drive side turning speed and driven side turning speed. A rate-of-change detecting portion detects a time-dependent rate of change of the detected turning speed difference. A control portion performs clutch connection at a second speed until an absolute value of the turning speed difference becomes a specific value or less and performs clutch connection at a third speed higher than the second speed after the absolute value of the turning speed difference becomes the specific value or less.

A vehicle provided with an automatic gearshift control device (an automated manual transmission device) for performing an on/off operation of a friction clutch and gearshift of a transmission by means of an electrically driven actuator has been conventionally known (Patent Document 1, for example). In the automatic gearshift control device disclosed in JP-A-2001-146930, driving control ("half-clutch control") of an actuator is carried out in accordance with a difference in "clutch rotational number", which is a difference in number of rotation between a driving side and a driven side of a friction clutch, so that the speed for connecting the friction clutch would be changed.

Patent Document 1: JP-A-2001-146930

The method in which the speed for connecting the friction clutch is changed in the half-clutch control in accordance with the difference in clutch rotational number, however, has the following problems. First, in some cases, there are individual variations of the friction clutches among a plurality of vehicles when a friction clutch is used, and thereby, a coefficient of friction between friction members of the friction clutch is different among the vehicles. Further, wear of the friction clutch, a change or deterioration of engine oil or such sometimes causes a variation in coefficient of friction between friction members of the friction clutch even in the case of the same vehicle. Such a difference or change in coefficient of friction, however, causes a change in feeling in connection of a friction clutch, and thereby, deterioration in feeling in a ride when the conventional method is used. Second, in the case that an accelerator is operated during the half-clutch, deteriorated is vehicle speed performance of following the operation of an accelerator. From this point of view, the automatic gearshift control device disclosed in JP-A-2001-146930 also causes deterioration in feeling in a ride.

In view of the above, an object of the invention is to provide a method to automatically control a power transmission of a vehicle, in particular of a saddle-riding type vehicle as indicated above and an automatic gearshift control device as indicated above, which can improve feeling in a ride of a vehicle in which off and on of a friction clutch and shifting of gears of a transmission are automatically performed.

According to the present invention said objective is solved by a method to automatically control a power transmission of a vehicle, in particular of a saddle-riding type vehicle having the features of independent claim 1. Preferred embodiments are laid down in the dependent claims.

Accordingly, it is provided a method to automatically control a power transmission of a vehicle, in particular of a saddle-riding type vehicle, performing on and off operation of a friction clutch provided between a driving side power transmission mechanism and a driven side power transmission mechanism, and shifting of gears of a transmission, wherein a clutch connecting speed is controlled on the basis of a reduction rate of a difference in rotational numbers of the driving side power transmission mechanism and the driven side power transmission mechanism during half-clutch control.

Preferably, the reduction rate is obtained by determining a reduction rate of a difference in clutch rotational number defined on the basis of a difference between the driving side rotational number and the driven side rotational number, the driving side rotational number being a rotational number of a driving side part of the friction clutch or the driving side power transmission mechanism and the driven side rotational number being a rotational number of a driven side part of the friction clutch or the driven side power transmission mechanism.

The connecting speed for connecting the friction clutch is set so that the reduction rate of the difference in clutch rotational number approaches a predetermined target value.

Yet further, preferably the larger the difference between the target value and the reduction rate of the difference in clutch rotational number is, the larger the speed for connecting the friction clutch is set. Therein, the target value may be set in accordance with a throttle opening.

Still further, preferably the larger the throttle opening is, the higher the target value is set.

Preferably, an engine is provided on the driving side of the friction clutch and a main shaft is provided on the driven side of the friction clutch, and wherein during the automatic gearshift control an engine rotational number and a main shaft rotational number are obtained, and wherein the reduction rate of the difference in clutch rotational number is calculated on the basis of the engine rotational number and the main shaft rotational number.

Further, preferably the engine includes a crankshaft, and wherein a rotational number of the crankshaft of the engine is detected by an engine rotational number sensor.

According to the present invention said objective is solved by an automatic gearshift control device having the features of independent claim 8. Preferred embodiments are laid down in the dependent claims.

Accordingly, it is provided an automatic gearshift control device comprising: a friction clutch provided between a driving side power transmission mechanism and a driven side power transmission mechanism; a transmission; an automatic gearshift device including an electrically-driven actuator for performing on and off of the friction clutch and for shifting gears of the transmission; a reduction rate obtaining device for obtaining a reduction rate of a difference in clutch rotational number defined on the basis of a difference between the driving side rotational number and the driven side rotational number, the driving side rotational number being a rotational number of a driving side part of the friction clutch or the driving side power transmission mechanism and the driven side rotational number being a rotational number of a driven side part of the friction clutch or the driven side power transmission mechanism; a connecting speed setting device for setting a speed for connecting the friction clutch so that the reduction rate of the difference in clutch rotational number, the reduction rate being obtained by means of the reduction rate obtaining device, would reach a predetermined target value; and a control device for controlling drive of the actuator so as to connect the friction clutch at the connection speed set by means of the connecting speed setting device.

Preferably, the larger the difference between the target value and the reduction rate of the difference in clutch rotational number, the reduction rate being obtained by means of the reduction rate obtaining device, is, the larger the connecting speed setting device sets the speed for connecting the friction clutch.

According to another preferred embodiment, the automatic gearshift control device further comprises a throttle opening detecting device for detecting a throttle opening, wherein the target value is set in accordance with the throttle opening detected by means of the throttle opening detecting device.

Preferably, the larger the throttle opening detected by means of the throttle opening detected device is, the higher the target value is set.

According to yet another preferred embodiment, the automatic gearshift control device further comprises an engine provided on the driving side of the friction clutch and a main shaft provided on the driven side of the friction clutch, the automatic gearshift control device further comprising an engine rotational number obtaining device for obtaining an engine rotational number, and a main shaft rotational number obtaining device for obtaining a main shaft rotational number, wherein the reduction rate obtaining device calculates the reduction rate of the difference in clutch rotational number on the basis of the engine rotational number obtained by means of the engine rotational number obtaining device and the main shaft rotational number obtained by means of the main shaft rotational number obtaining device.

Preferably, the engine includes a crankshaft and the engine rotational number obtaining device is an engine rotational number sensor for detecting a rotational number of the crankshaft of the engine.

Further, preferably the main shaft rotational number obtaining device is a main shaft rotational number sensor provided on the main shaft.

Still further, preferably the main shaft is connected to a driving shaft through the transmission and the main shaft rotational number obtaining device includes a vehicle speed sensor provided on the driving shaft to calculate a main shaft rotational number on the basis of the drive shaft rotational number detected by means of the vehicle speed sensor and the stage of gears in the transmission.

Yet further still, preferably the automatic gearshift control device is mounted to a vehicle including a driving wheel, and wherein the main shaft rotational number obtaining device comprises a driving wheel rotational number sensor for detecting the rotational number of the driving wheel to calculate the main shaft rotational number on the basis of the rotational number of the driving wheel detected by means of the driving wheel rotational number sensor and the stage of gears in the transmission.

In the following, the present invention is explained in greater detail with respect to several embodiments thereof in conjunction with the accompanying drawings, wherein:
- Fig. 1: is a side view of a motorcycle in accordance with Embodiment 1,
- Fig. 2: is a structural view of a driving system of a motorcycle,
- Fig. 3: is a perspective view of transmission gears forming a transmission,
- Fig. 4: is a block diagram showing a whole structure of a control system mounted to a motorcycle,
- Fig. 5: is a block diagram showing a driving system device group,
- Fig. 6: is a block diagram showing a sensor and switch group,
- Fig. 7: is a flowchart showing a gearshift controlling process in running,
- Fig. 8: is a flowchart showing a half-clutch controlling process called and executed in Step S150 in the flowchart shown in Fig. 7,
- Fig. 9: shows an example of a target value setting table,
- Fig. 10: shows an example of a connecting speed setting table,
- Fig. 11: shows a clutch position, an engine rotational number and a change in difference in clutch rotational number in accordance with the passage of time in executing the processes shown in Figs. 7 and 8,
- Fig. 12: shows a clutch position, an engine rotational number and a change in difference in clutch rotational number in accordance with the passage of time in executing the processes shown in Figs. 7 and 8,
- Fig. 13: shows a clutch position, a throttle opening, an engine rotational number and a change in difference in clutch rotational number in accordance with the passage of time in executing the processes shown in Figs. 7 and 8,
- Fig. 14: is a flowchart showing a half-clutch controlling process in Embodiment 2,
- Fig. 15: shows an example of a target value setting table in Embodiment 2, and
- Fig. 16: shows an example of a connecting speed setting table in Embodiment 2.

### Description of the Reference Numerals and Signs:

- 10:: motorcycle (vehicle)
- 11:: vehicle body frame
- 16:: seat
- 28:: engine unit
- 43:: shift switch
- 43a:: shift-up switch
- 43b:: shift-down switch
- 49:: throttle driving actuator
- 50:: throttle opening sensor
- 53:: engine rotational number sensor
- 54:: clutch (friction clutch)
- 54a:: clutch housing
- 54b:: clutch boss
- 55:: main shaft
- 56:: main shaft rotational number sensor
- 58:: driving shaft
- 63:: clutch actuator (actuator)
- 65:: shift actuator (actuator)
- 69:: vehicle speed sensor
- 70:: gear position sensor
- 80:: transmission
- 90:: main microcomputer
- 96:: main switch
- 100:: ECU (control device)

Fig. 4
   90: main microcomputer
   91a: clutch actuator controlling program
   91b: shift actuator controlling program
   93: driving circuit
   96: main switch
   97: battery
   98: power source circuit
   110: driving system device group
   120: sensor and switch group
Fig. 5
   45: indicator
   49: throttle driving actuator
   63: clutch actuator
   65: shift actuator
   110: driving system device group
Fig. 6
   42: throttle input sensor
   43: shift switch
   50: throttle opening sensor
   53: engine rotational number sensor
   56: main shaft rotational number sensor
   68: clutch position sensor
   69: vehicle speed sensor
   70: gear position sensor
   120: sensor and switch group
Fig. 7
   gearshift controlling process in running
   s100: starting disconnection of clutch
   s110: starting gearshift
   s120: is clutch disconnected?
   s130: holding clutch position
   s140: is gearshift completed?
   s150: half-clutch control
   s160: connecting clutch
   end
Fig. 8
   half-clutch controlling process
   s200: obtaining throttle opening
   s210: setting target value of reduction rate of difference in clutch rotational number
   s220: obtaining engine rotational number
   s230: calculating rotational number of driving shaft
   s240: calculating rotational number of main shaft
   s250: calculating difference in clutch rotational number
   s260: calculating actual reduction rate
   s270: setting clutch connection speed
   s280: starting connection of clutch
   s290: is difference in clutch rotational number predetermined value or less?
   end
Fig. 9
   target value
   reduction rate of difference in clutch rotational number
   fully closed
   fully open
   throttle opening
Fig. 10
   clutch speed
   target value
   actual reduction rate
Fig. 11(a)
   clutch position
   clutch off area
   half-clutch area
   time
Fig. 11(b)
   engine rotational number
   time
Fig. 11(c)
   difference in clutch rotational number
   time
Fig. 12(a)
   clutch position
   clutch off area
   new product
   after wear
   half-clutch area
   time
Fig. 12(b)
   engine rotational number
   time
Fig. 12(c)
   difference in clutch rotational number
   time
Fig. 13(a)
   clutch position
   time
Fig. 13(b)
   throttle opening
   time
Fig. 13(c)
   engine rotational number
   time
Fig. 13(d)
   difference in clutch rotational number
   time
Fig. 14
   half-clutch controlling process
   s300: obtaining throttle opening
   s310: setting target value of reduction rate of difference in clutch rotational number
   s320: obtaining engine rotational number
   s330: calculating actual rotational number reduction rate
   s340: setting clutch connecting speed
   s350: starting connection of clutch
   s360: does half-clutch condition continue for predetermined time?
   s370: is difference in clutch rotational number predetermined value or less?
   end
Fig. 15
   target value
   reduction rate of engine rotational number
   fully closed
   fully open
   throttle opening
Fig. 16
   clutch speed
   target value
   actual rotational number reduction rate

Embodiments will be described hereinafter in detail on the basis of the drawings.

### Embodiment 1

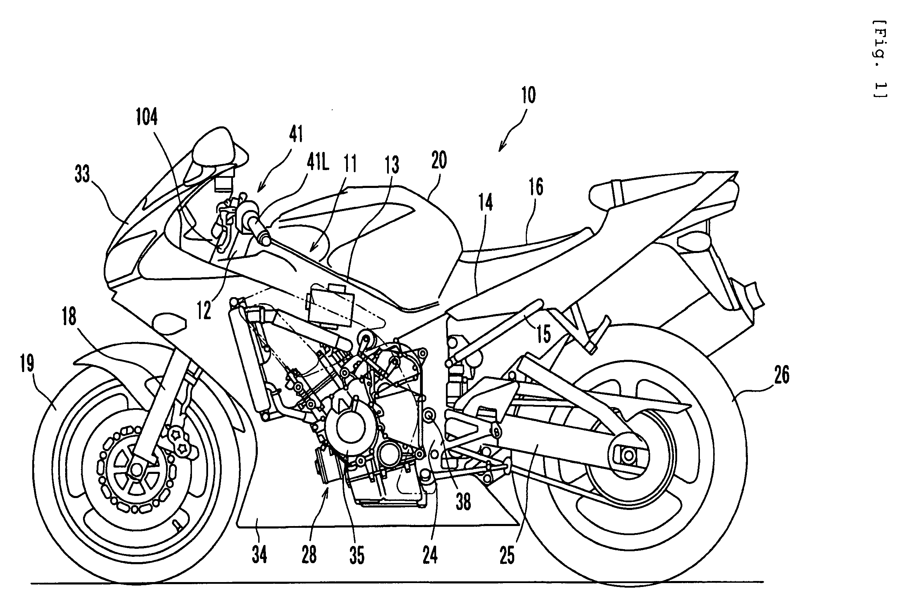

A vehicle in accordance with Embodiment 1 is a motorcycle 10 as shown in Fig. 1. The motorcycle 10 comprises a vehicle body frame 11 forming a framework and a seat 16 on which a rider sits. A rider sitting on the seat 16 straddles the vehicle body frame 11 to ride the motorcycle. In the embodiment, the shape of a vehicle is not limited to that of Fig. 1. The maximum speed, displacement, size of a vehicle and the like are not limited either. Moreover, a vehicle in accordance with the embodiment is not limited to a so-called motorcycle provided with a fuel tank in front of a seat but may be another type motorcycle and the like. The embodiment is not limited to a motorcycle either but may be another saddle riding type vehicle. Further, the embodiment is not limited to a saddle riding type vehicle but may be another vehicle such as a four-wheel buggy for riding double.

In the following description, the directions of the front, the rear, the right and the left mean directions from a view of a rider sitting on the seat 16. The vehicle body frame 11 comprises a steering head pipe 12, a main frame 13 extending obliquely down-and-rearward from the steering head pipe 12, left and right seat rails 14 extending obliquely up-and-rearward from a middle part of the main frame 13 and left and right seat pillar tubes 15 connected with a rear end of the main frame 13 and middle parts of the seat rails 14.

The steering head pipe 12 holds a front wheel 19 through a front fork 18. A fuel tank 20 and the seat 16 are held on the seat rails 14. The seat 16 extends from the upper part of the fuel tank 20 to the rear end of the seat rail 14. The fuel tank 20 is provided above a front half of the seat rail 14.

A pair of left and right rear arm brackets 24 is provided on a rear end of the main frame 13. The rear arm brackets 24 and such provided on the main frame 13 are considered to form a part of the vehicle body frame 11 in Embodiment 1.

The rear arm brackets 24 project downward from the rear end of the main frame 13. The rear arm brackets 24 are provided with a pivot shaft 38 on which front ends of rear arms 25 are held so as to be able to freely swing. On the rear ends of the rear arms 25, held is a rear wheel 26.

The vehicle body frame 11 holds an engine unit 28 for driving the rear wheel 26. A crankcase 35 is suspended from the main frame 13 to be held. The engine unit 28 includes a gasoline engine (not shown) in Embodiment 1. The engine included in the engine unit 28, however, is not limited to an internal combustion engine such as a gasoline engine but may be a motor engine or the like. The engine may be a combination of a gasoline engine and a motor engine.

The motorcycle 10 comprises a front cowl 33 and left and right leg shields 34. The leg shields 34 are a cover member for covering a front part of rider's legs.

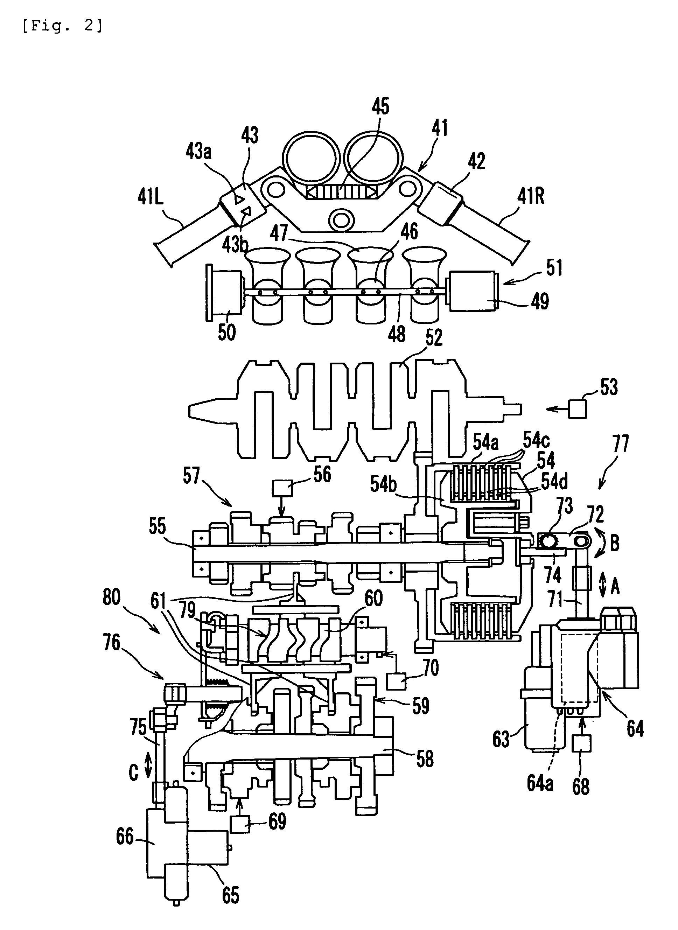

A brake pedal is provided on the lower-right part of the motorcycle 10 although it is not shown in Fig. 1. The brake pedal is for braking the rear wheel 26. Operating a brake lever (not shown) provided in the vicinity of a right grip 41 R (refer to Fig. 2) of a handlebar 41 causes the front wheel 19 to be braked. In the vicinity of a left grip 41 L of the handlebar 41, provided is a clutch lever 104. Operating the clutch lever 104, also, enables off and on of a clutch in Embodiment 1.

Fig. 2 is a structural view of a driving system of the motorcycle shown in Fig. 1. The right grip 41R of the handlebar 41 (refer to Fig. 1, also) forms an accelerator grip to which a throttle input sensor 42 are mounted. The throttle input sensor 42 detects an acceleration input (a throttle opening input) from a rider. On a side of the left grip 41L of the handlebar 41, provided is a shift switch 43. The shift switch 43 comprises a shift-up switch 43a and a shift-down switch 43b. Manual operation of the shift switch 43 allows a shift position to be increased or decreased between neutral and the uppermost gear stage (a six-speed gear stage in Embodiment 1). Further, an indicator 45 for indicating a current shift position and such is provided at a center part of the handlebar 41.

A throttle 47 forming an air inhalation path is provided with a throttle valve 46. On the right end of a valve shaft 48 of the throttle valve 46, provided is a throttle driving actuator 49 while a throttle opening sensor 50 is provided on the left end. The throttle driving actuator 49 and the throttle opening sensor 50, which are mounted to the valve shaft 48, form a DBW (a drive by wire) 51. The DBW 51 drives the throttle 47 by means of the throttle driving actuator 49 in accordance with a result of the detection of the throttle opening sensor 50 so that the throttle 47 would be open and closed.

An engine rotational number sensor 53 is provided on the right side of an end of a crankshaft 52 of an engine not shown. The crankshaft 52 is connected to a main shaft 55 through a wet multiple disc clutch 54. The clutch 54 comprises a clutch housing 54a and a clutch boss 54b. Plural friction plates 54c are mounted to the clutch housing 54a while plural clutch plates 54d are mounted to the clutch boss 54b. The respective clutch plates 54d are provided between adjacent friction plates 54c and 54c. In the embodiment, the friction clutch is not limited to a wet multiple disc clutch but may be a dry clutch or a single disc clutch, for example. Multiple stage (6 stages in Fig. 2) transmission gears 57 are mounted to the main shaft 55. The main shaft 55 is provided with a main shaft rotational number sensor 56. The respective transmission gears 57 mounted to the main shaft 55 are engaged with transmission gears 59 mounted to a driving shaft 58 provided in parallel to the main shaft 55. In Fig. 2, the transmission gears 57 are separately shown from the transmission gears 59 for the sake of convenience.

The transmission gears 57 and the transmission gears 59 are mounted so that one or both of them other than selected gears would idle with respect to the main shaft 55 or the driving shaft 58. Accordingly, transmission of driving force from the main shaft 55 to the driving shaft 58 is carried out only through the selected pair of transmission gears. A condition that a pair of the transmission gears 57 and 59 is engaged with each other so that the driving force would be transmitted from the main shaft 55 to the driving shaft 58 is assumed to be a gear-in condition.

An operation of selecting the transmission gears 57 and the transmission gears 59 to shift gears is carried out by means of a shift cam 79. In the shift cam 79, formed are plural (three in Fig. 2) cam grooves 60. A shift fork 61 is mounted to each of the cam groove 60. The respective shift forks 61 are interlocked with the predetermined transmission gears 57 and 59 of the main shaft 55 and the driving shaft 58, respectively. Rotation of the shift cam 79 causes movement of the shift fork 61 along the cam groove 60 in the axial direction. The predetermined transmission gears 57 and 59 spline-fitted to the main shaft 55 and the driving shaft 58 operate together with the above to move in the axial direction. The transmission gears 57 and 59 having moved in the axial direction interlock with other transmission gears 57 and 59, which are idle and mounted to the main shaft 55 and the driving shaft 58, so that shift of the gears is performed. The transmission gears 57 and 59 and the shift cam 79 form a transmission 80.

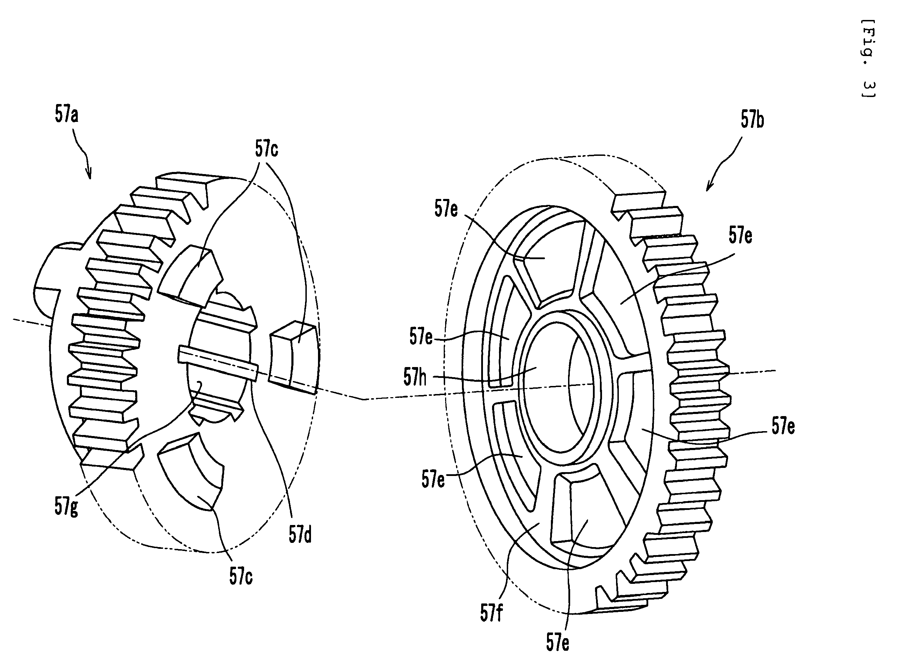

The transmission 80 is a dog clutch transmission and comprises as a transmission gear 57 a first gear 57a provided on its shaft end surface with interlocking projections 57c and a second gear 57b provided on its shaft end surface opposite to the interlocking projections 57c with interlocking concaves 57e, as shown in Fig. 3. The transmission 80 comprises the first gears 57a and the second gears 57b in plural number. The transmission 80 comprises as a transmission gear 59 plural first gears provided with interlocking projections and plural second gears provided with interlocking concaves. The plural first and second gears have the same structures as those of the first gear 57a and the second gear 57b shown in Fig. 3, respectively. Accordingly, description of the plural first and second gears is omitted. The first gear 57a is provided with three interlocking projections 57c, which are provided equally in distance in the circumferential direction on the outer periphery of a shaft end surface of the first gear 57a. The second gear 57b are provided with six interlocking concaves 57e, which are also provided equally in distance in the circumferential direction.

In the axial center of the first gear 57a, formed is an insertion hole 57g into which the main shaft 55 and the driving shaft 58 are inserted. Plural grooves 57d are formed on the circumferential surface of the insertion hole 57g. The first gear 57a is spline-fitted in the main shaft 55 and the driving shaft 58. On the other hand, an insertion hole 57h into which the main shaft 55 and the driving shaft 58 are inserted is formed on the second gear 57b, also. The insertion hole 57h, however, is provided with no groove. Accordingly, the second gear 57b is mounted to the main shaft 55 and the driving shaft 58 while it is idling.

Rotation of the shift cam 79 (refer to Fig. 2) causes movement of the shift fork 61 along the cam groove 60. Operating together with this, the first gear 57a moves in the axial direction along a spline of the main shaft 55 and the driving shaft 58. The interlocking projection 57c of the first gear 57a then interlocks with the interlocking concave 57e of the second gear 57b, so that a combination of the transmission gears 57 and 59 for transmitting driving force from the main shaft 55 to the driving shaft 58 is switched. This allows shifting of the gears to be performed.

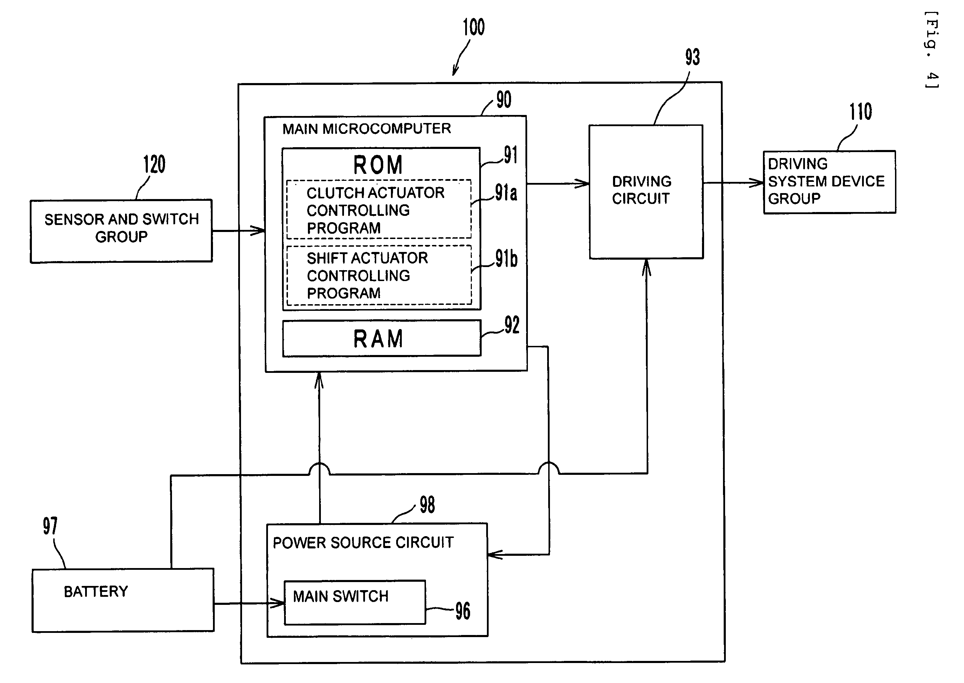

As shown in Fig. 2, the clutch 54 and the transmission 80 are respectively driven by means of a clutch actuator 63 and a shift actuator 65. The clutch actuator 63 is connected to a clutch 54 through a hydraulic transmission mechanism 64, a rod 71, a lever 72, a pinion 73 and a rack 74. The hydraulic transmission mechanism 64 comprises a hydraulic cylinder 64a, an oil tank (not shown), a piston (not shown) and the like. The hydraulic transmission mechanism 64 generates oil pressure by driving the clutch actuator 63 to transmit the oil pressure to the rod 71. Drive of the clutch actuator 63 causes a reciprocating operation of the rod 71 as shown by an arrow A and rotation of the lever 72 as shown by an arrow B. This causes the clutch 54 to be connected or disconnected in accordance with the moving direction of the rack 74. An electric motor is used as a clutch actuator 63 in Embodiment 1. The embodiment, however, is not limited to the above and may use a solenoid, electromagnetic valve and such, for example. The automatic gearshift control device in accordance with the embodiment comprises: (1) an automatic clutch device 77 formed from the above-mentioned clutch 54, the clutch actuator 63, the hydraulic transmission mechanism 64, the rod 71, the lever 72, the pinion 73 and the rack 74; and (2) an ECU 100 for controlling drive of the transmission 80, the shift actuator 65, a speed reducing mechanism 66, a rod 75, a link mechanism 76, the clutch actuator 63 and the shift actuator 65 (refer to Fig. 4).

The shift actuator 65 is connected to the shift cam 79 through the speed reducing mechanism 66, the rod 75 and the link mechanism 76. The speed reducing mechanism 66 comprises plural speed reduction gears (not shown).

In shifting gears, the shift actuator 65 is driven to reciprocate the rod 75 in a direction shown by an arrow C and the shift cam 79 rotates at a predetermined angle through the link mechanism 76. This makes the shift fork 61 move in the axial direction along the cam grooves 60 by predetermined quantity to fix a pair of the transmission gears 57 and 59 to the main shaft 55 and the driving shaft 58, respectively, so that driving force is transmitted from the main shaft 55 to the driving shaft 58. In Embodiment 1, an electric motor is used as the shift actuator 65. The embodiment, however, is not limited to the above. The shift actuator 65 may be a solenoid, an electromagnetic valve or the like, for example.

The hydraulic transmission mechanism 64 connected to the clutch actuator 63 is provided with a clutch position sensor 68 for detecting a position of a stroke of the piston to detect a position of the clutch (a distance between the friction plate 54c and the clutch plate 54d). In Embodiment 1, it is arranged that the clutch position sensor 68 be used to detect a position of a stroke of the piston so as to detect a position of the clutch. The embodiment, however, is not limited to the above. It is possible to detect a position of a transmission mechanism provided between the clutch actuator 63 and the clutch 54. A position of the rod 71 or the rack 74 may be detected, for example. Further, the embodiment is not limited to the case that the position of the clutch is indirectly obtained on the basis of the detected position of a stroke of the piston like Embodiment 1. A distance between the friction plate 54c and the clutch plate 54d may be directly measured by means of a sensor. The driving shaft 58 is provided with a vehicle speed sensor 69. The shift cam 79 is provided with a gear position sensor 70 for detecting a gear position (rotational quantity of the shift cam).

In accordance with an operation of the shift-up switch 43a or the shift-down switch 43b, the later-mentioned ECU 100 (an engine control device) controls drive of the clutch actuator 63 and the shift actuator 65 to shift gears. Concretely, a series of operations of disconnecting the clutch 54 by means of the clutch actuator 63 → shifting the transmission gears 57 and 59 by means of the shift actuator 65 → connecting the clutch 54 by means of the clutch actuator 63 are performed in running on the basis of a predetermined program or map.

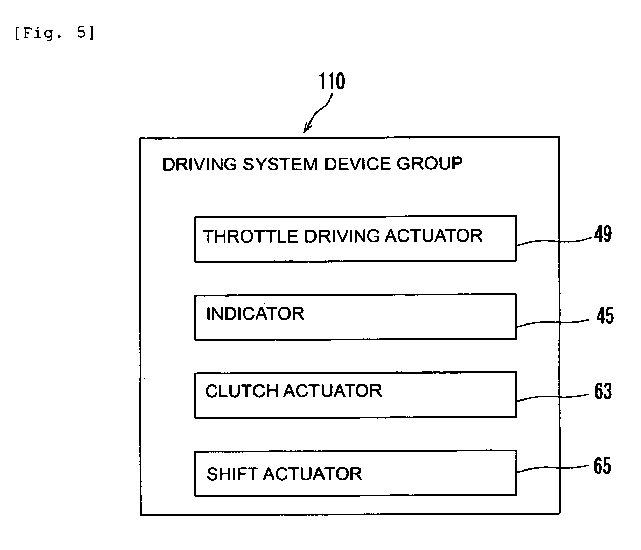

Fig. 4 is a block diagram of a whole structure of a control system mounted to the motorcycle 10. A main microcomputer 90 included in the ECU 100 is connected to a driving system device group 110 via a driving circuit 93. The ECU 100 corresponds to the control device in the embodiment. The driving system device group 110 comprises the throttle driving actuator 49, the indicator 45, the clutch actuator 63 and the shift actuator 65 (refer to Fig. 2, also), as shown in Fig. 5.

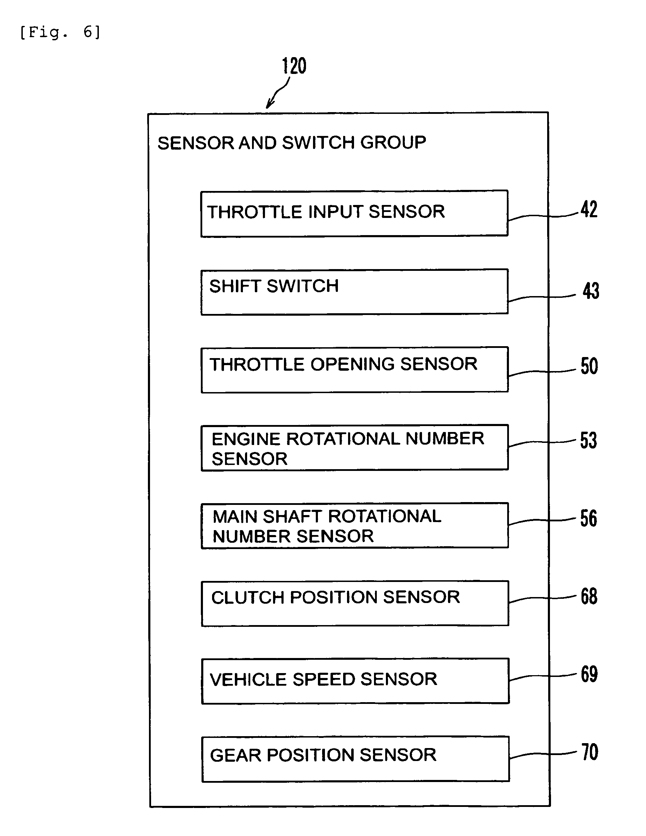

The driving circuit 93 supplies respective devices forming the driving system device group 110 with a proper electric current from a battery 97 in accordance with a driving signal supplied from the main microcomputer 90. The main microcomputer 90 is connected to a sensor and switch group 120. The sensor and switch group comprises the throttle input sensor 42, the shift switch 43, the throttle opening sensor 50, the engine rotational number sensor 53, the main shaft rotational number sensor 56, the clutch position sensor 68, the vehicle speed sensor 69 and the gear position sensor 70 (refer to Fig. 2, also), as shown in Fig. 6. Results of the detection by means of the respective sensors are arranged to be inputted to the main microcomputer 90. The main microcomputer 90 supplies the respective devices forming the driving system device group 110 with the driving signal to control drive on the basis of the detection results inputted from the respective sensors.

The main microcomputer 90 comprises a ROM 91 and a RAM 92. In the ROM 91, stored are a clutch actuator controlling program 91a and a shift actuator controlling program 91b. The clutch actuator controlling program 91 a is a program for controlling drive of the clutch actuator 63. The shift actuator controlling program 91b is a program for controlling a drive of the shift actuator 65. The programs stored in the ROM 91 are incapable of deletion. A new program or the like cannot be written in the ROM 91 either.

The above-mentioned clutch actuator controlling program 91a or the shift actuator controlling program 91b are decoded in the RAM 92 in execution, and then, read by means of the main microcomputer 90. The main microcomputer 90 controls drive of the clutch actuator 63 and the shift actuator 65 on the basis of the programs decoded in the RAM 92.

The power source circuit 98 connected to the battery 97 comprises a main switch 96 capable of interlocking with a key switch (not shown) to switch between on and off. The power source circuit 98 converts the voltage of the battery 97 into the voltage for driving the main microcomputer 90 to supply the main microcomputer 90 with the voltage when the main switch 96 is turned on.

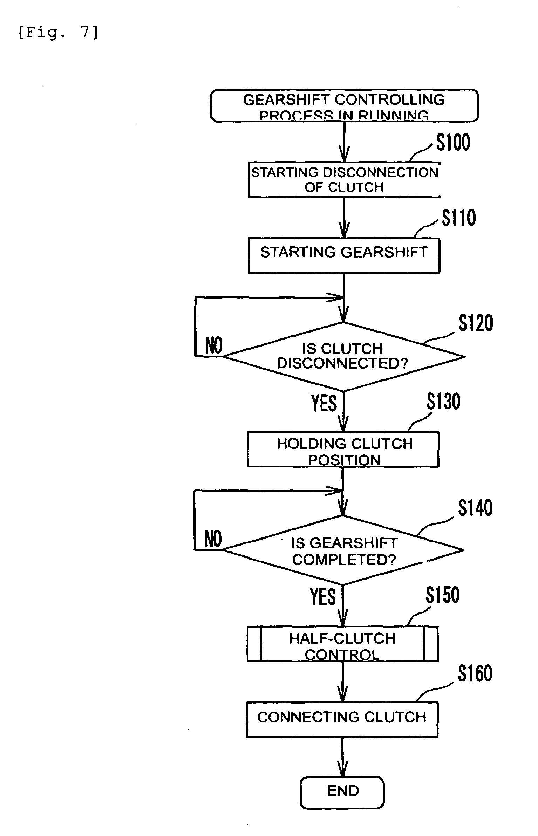

Now, an operation of shifting gears of the motorcycle 10 (a shift-up operation or a shift-down operation) in running will be described. Fig. 7 is a flowchart showing a gearshift controlling process in running. The gearshift controlling process in running is called from a main routine, which has been executed in advance, to be executed when a gearshift operation is carried out during running of a vehicle, namely, when the shift-up switch 43a or the shift-down switch 43b is operated.

First, the ECU 100 starts disconnection of the clutch. In this process, the ECU 100 supplies the clutch actuator 63 with a driving signal to make the clutch actuator 63 disconnect the clutch 54. Execution of the process causes the clutch 54 to be disconnected at a specific speed.

After the process in Step S100 is executed, started is gearshift in Step S110. In this process, the ECU 100 waits until a predetermined time has passed from a time of starting disconnection of the clutch 54 in Step S100, supplies the shift actuator 65 with a driving signal and makes the shift actuator 65 start gearshift of the transmission gears 57 and 59. After this process, started is rotation of the shift cam 79.

After the process in Step S110 is executed, it is then judged whether the clutch is disconnected or not in Step S120. In this process, the ECU 100 judges whether the clutch position of the clutch 54 is disconnected or not on the basis of a result of the detection by means of the clutch position sensor 68 (refer to Fig. 2). When it is judged that the clutch 54 is not disconnected, the process returns to Step S120 to wait until the clutch 54 is disconnected.

On the other hand, in the case that the clutch is judged to be disconnected in Step S120, a process for holding the position of the clutch is then performed in Step S130. In this process, the ECU 100 carries out a process for holding the position of the clutch judged to be disconnected in Step S120. This process allows the disconnected clutch 54 to be held as it is.

After the process in Step S130 is executed, it is then judged whether the gearshift is completed or not in Step S140. In this process, the ECU 100 judges whether the gearshift is completed or not on the basis of a result of the detection by means of the gear position sensor 70. In the case that the gearshift is not completed, the process is returned to Step S140 to wait until the gearshift is completed.

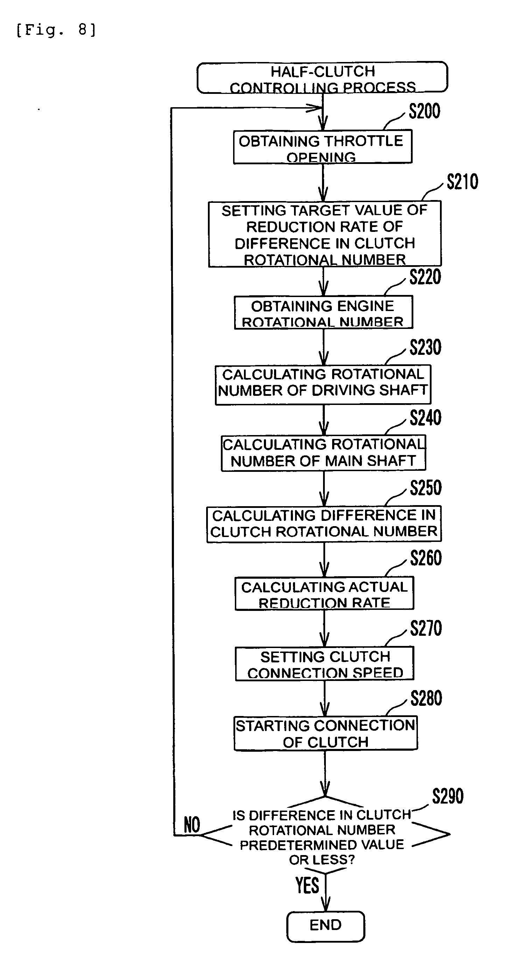

On the other hand, when it is judged that the gearshift is completed in Step S140, half-clutch control is then performed in Step S150. The half-clutch control will be described later, using the drawing (Fig. 8).

After the process in Step S150 is executed, the clutch is then connected in Step S160. In this process, the ECU 100 supplies the clutch actuator 63 with a driving signal to make the clutch actuator 63 connect the clutch 54. Executing the process allows the clutch 54 to be connected at a specific speed. The gearshift controlling process in running is completed after the process in Step S150 is executed.

Fig. 8 is a flowchart showing a process called and executed in Step S150 in the half-clutch controlling process, namely, the gearshift controlling process in running shown in Fig. 7. When the half-clutch controlling process is started, a process for obtaining a throttle opening is performed in Step S200. In this process, the ECU 100 obtains a result of the detection by means of the throttle opening sensor 50 (refer to Fig. 2).

After the process in Step S200 is executed, a "target value" of a "reduction rate" of a "difference in clutch rotational number" is then set in Step S210. The "difference in clutch rotational number" means a difference between the number of rotation on the driving side of the clutch 54 (the driving side part of the clutch 54 or a power transmitting mechanism closer to the driving side than the clutch 54) (= the rotational number on the driving side) and the number of rotation on the driven side of the clutch 54 (the driven side part of the clutch 54 or a power transmitting mechanism closer to the driven side than the clutch 54) (= the rotational number on the driven side). In Embodiment 1, the difference in clutch rotational number is defined to be a difference between the rotational number of the clutch housing 54a and the rotational number of the clutch boss 54b in the clutch 54. In this process, the ECU 100 performs a process of setting a target value of a reduction rate of a difference in clutch rotational number (also referred to as a target value simply, hereinafter). In Embodiment 1, the target value is a target value stored in a storing device in advance. Concretely, the target value is set on the basis of a target value setting table stored in the ROM 91 or such. The target value, however, is not limited to the one based on a table, but may be set on the basis of a function, a map or the like. Further, the target value may be set so as not to be changeable or so as to be capable of renewal, conversely, by an operation from the outside or the like.

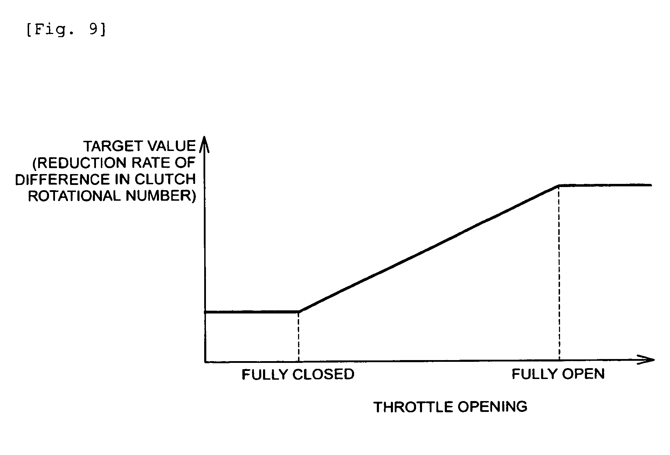

Fig. 9 is a graph showing an example of the above-mentioned target value setting table. In Fig. 9, the horizontal axis shows the throttle opening while the vertical axis shows the target value to be set. As shown in Fig. 9, in the motorcycle 10 in Embodiment 1, the larger the throttle opening detected by means of the throttle opening sensor 50 is, the larger the target value to be set is.

After the process in Step S210 is executed, a process of obtaining the engine rotational number is then performed in Step S220. In this process, the ECU 100 obtains a result of the detection by means of the engine rotational number sensor 53 to obtain the engine rotational number (the rotational number of the crankshaft 52).

After the process in Step S220 is executed, a process of obtaining the rotational number of the driving shaft is then carried out in Step S230. In this process, the ECU 100 obtains a result of the detection by means of the vehicle speed sensor 69 to obtain the rotational number of the driving shaft 58.

After the process in Step S230 is executed, a process of calculating the rotational number of the main shaft is than performed in Step S240. In this process, the ECU 100 calculates the rotational number of the main shaft 55 on the basis of the rotational number of the driving shaft 58, which is obtained in the above-mentioned process in Step S230, and a reduction rate obtained from a current stage of the transmission gears.

After the process in Step S240 is executed, a process of calculating a difference in clutch rotational number is than performed in Step S250. In this process, the ECU 100 performs a process of calculating a difference in clutch rotational number on the basis of the engine rotational number obtained in the above-mentioned process in Step S220 and the rotational number of the main shaft calculated in the process in Step S240. The difference in clutch rotational number can be obtained by calculating a difference between the engine rotational number and the rotational number of the main shaft.

After the process in Step S250 is executed, an actual reduction rate is than calculated in Step S260. The actual reduction rate is a substantial reduction rate of the difference in clutch rotational number and obtained on the basis of actual results of the detection by means of the engine rotational number sensor 53 and the vehicle speed sensor 69. In this process, the ECU 100 calculates the actual reduction rate on the basis of the difference in clutch rotational number calculated in the process in Step S250 and the difference in clutch rotational number calculated in the process in Step S250 having been executed predetermined time before.

After the process in Step S260 is executed, a process of setting a clutch connecting speed is then performed in Step S270. In this process, the ECU 100 sets the speed for connecting the clutch 54 on the basis of the target value set in the process in Step S210, the actual reduction rate calculated in the process in Step S260 and a connecting speed setting table stored in the ROM 91 or such.

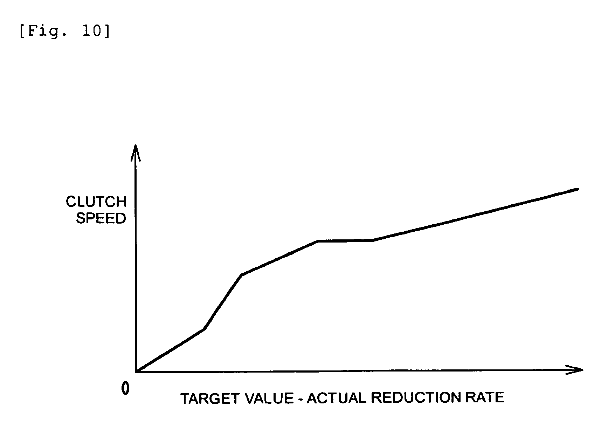

Fig. 10 shows an example of the connecting speed setting table. In Fig. 10, the horizontal axis shows the difference between the target value set in the process in Step S210 and the actual reduction rate calculated in the process in Step S260 while the vertical axis shows the speed for connecting the clutch 54. As shown in Fig. 10, in the motorcycle 10 in Embodiment 1, the larger the difference between the target value and the actual reduction rate is, the larger the clutch connecting speed to be set is.

After the process in Step S270 is executed, connection of the clutch is then started in Step S280. In this step, the ECU 100 supplies the clutch actuator 63 with a driving signal to make the clutch actuator 63 connect the clutch 54 at the clutch connecting speed set in the process in Step S270. After the process is executed, connection of the clutch 54 is started at the clutch connecting speed set in the process in Step S270.

After the process in Step S280 is executed, it is then judged in Step S290 whether or not the difference in clutch rotational number reaches the predetermined value or less. In this process, the ECU 100 judges whether or not the difference in clutch rotational number calculated in the process in Step S250 reaches the predetermined value or less. When it is judged that the difference in clutch rotational number does not reach the predetermined value or less, the process is returned to Step S200 to execute the processes from Step S200 to Step S280 again. On the other hand, in the case that the difference in clutch rotational number reaches the predetermined value or less, the half-clutch controlling process is completed.

As shown in Fig. 8, in the half-clutch controlling process in Embodiment 1, the clutch connecting speed is set on the basis of a difference between the target value of the reduction rate of the difference in clutch rotational number and the actual reduction rate of the difference in clutch rotational number. Control of connection of the clutch 54 based on the set clutch connecting speed is repeated every predetermined time period. The half-clutch control is completed when the difference in clutch rotational number reaches the predetermined value or less, and then, the process goes to the process of connecting the clutch (refer to Step S160 in Fig. 7).

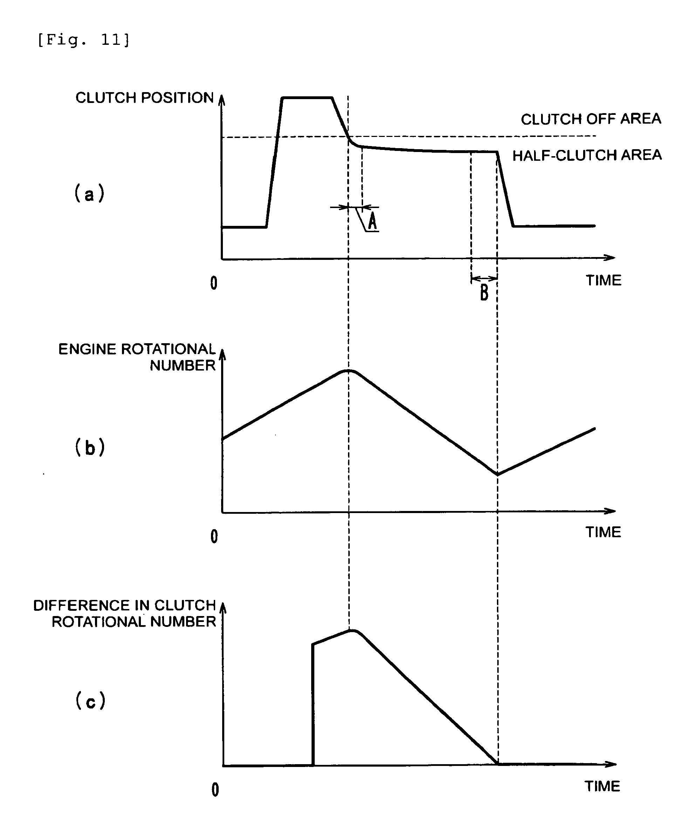

Fig. 11 illustrates the gearshift controlling process in running shown in Fig. 7 and the clutch position, the engine rotational number and the change in difference in clutch rotational number in accordance with the passage of time in executing the half-clutch controlling process shown in Fig. 8. Fig. 11 shows a case that the throttle 47 (refer to Fig. 2) is closed during the gearshift. In Fig. 11(a), illustrated is the clutch position from the start to the end of the gearshift. Fig. 11(b) illustrates the change in engine rotational number in accordance with the passage of time from the start to the end of the gearshift. Fig. 11(c) illustrates the change in difference in clutch rotational number in accordance with the passage of time from the start to the end of the gearshift.

When the gearshift is started, the clutch 54 is first disconnected at a high speed. When the clutch 54 enters a state of disconnection, the clutch is held at that clutch position. The half-clutch control is then performed when the completion of the gearshift is detected by means of the gear position sensor 70 while the clutch position in the disconnection state is maintained.

In the half-clutch control, the engine rotational number increases since engine driving force to be transmitted to the main shaft 55 is small when the clutch position moves from a clutch off area to a half-clutch area. The difference in clutch rotational number also increases simultaneously. At that time, the target value is a constant value since the throttle opening is not changed as described above (refer to Fig. 9). The actual reduction rate, however, is a small value (a negative number) since the difference in clutch rotational number is increased. The actual reduction rate is a value, which is positive when the difference in clutch rotational number is decreasing and negative when the difference in clutch rotational number is increasing. Accordingly, the difference between the target value and the actual reduction rate becomes large, so that a large value of clutch connecting speed is set (refer to Fig. 10). Therefore, at a starting time of the half-clutch (an area A in the drawing), the clutch 54 is rapidly connected. The difference between the target value and the actual reduction rate becomes substantially 0 when the difference in clutch rotational number decreases during the half-clutch control and the actual reduction rate becomes substantially equal to the target value. Accordingly, the clutch connecting speed is also set at substantially 0 (refer to Fig. 10). This allows the clutch position to be held so that the clutch position would be substantially fixed at a time when the half-clutch is completed (an area B in the drawing).

As described above, in the motorcycle 10 in Embodiment 1, the speed for connecting the clutch 54 is controlled so that the actual reduction rate of the difference in clutch rotational number would approach the target value. This allows the clutch 54 to be smoothly connected in the half-clutch process. As a result, the feeling in a ride can be improved.

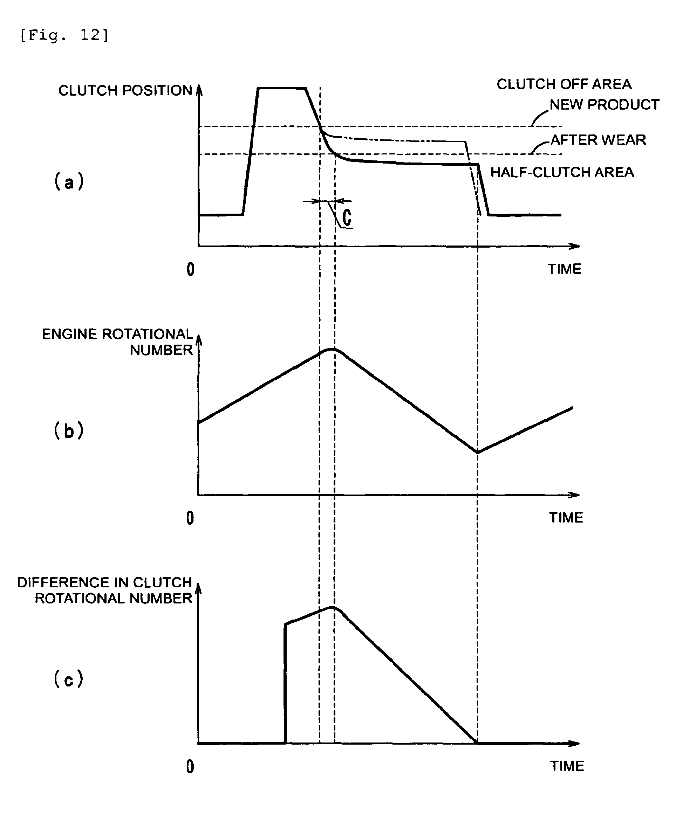

Fig. 12 illustrates a case of wear of the clutch 54 due to use of the motorcycle 10 or the like. As shown in Fig. 12(a), wear of the clutch 54 causes shift of a border between a clutch area and a half-clutch area to the clutch connecting side (the lower side in the drawing). In Fig. 12(a), the change in clutch position according to the passage of time in the case that the clutch 54 is a new product is shown by a double dotted line.

When the border between the clutch-off area and the half-clutch area is shifted to the clutch connecting side, a distance for connecting the clutch 54 to the half-clutch area becomes large, and thereby, the engine rotational number greatly increases in accordance with the distance. At that time, the actual reduction rate becomes small in value (a negative number), and therefore, the difference between the target value and the actual reduction rate becomes large in value, so that a large value of clutch connecting speed is set (refer to Fig. 10). That is to say, the clutch 54 is rapidly connected during a time for reaching the border in the wear (an area C in the drawing) in the case of wear of the clutch 54.

As described above, in the motorcycle 10 in Embodiment 1, the clutch 54 is arranged to be rapidly connected before reaching the half-clutch area even in the case that the clutch 54 is worn. This allows empty running of the vehicle to be reduced during the half-clutch control in the case of wear of the clutch 54, and thus, the clutch 54 can be smoothly connected. As a result, the feeling in a ride can be improved.

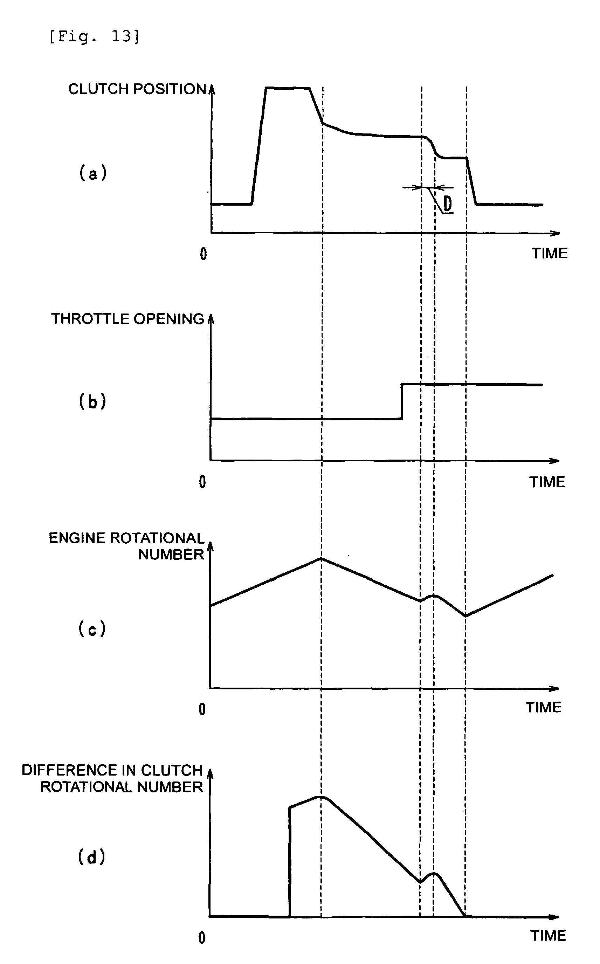

Fig. 13 illustrates a case that an operation of the accelerator is carried out during the half-clutch control and the throttle opening is increased. Fig. 13(a) shows the change in clutch position in accordance with the passage of time from the start to the end of the gearshift. Fig. 13(b) shows the change in throttle opening in accordance with the passage of time from the start to the end of the gearshift. Fig. 13(c) shows the change in engine rotational number in accordance with the passage of time from the start to the end of the gearshift. Fig. 13(d) shows the change in difference in clutch rotational number in accordance with the passage of time from the start to the end of the gearshift.

When the operation of the accelerator is carried out during the half-clutch control and the throttle opening is increased, the engine rotational number also increases in accordance with the above. Increase of the engine rotational number causes increase of the difference in clutch rotational number. At that time, the target value to be set is higher than that of the case of performing no operation of the accelerator since the throttle opening increases (refer to Fig. 9). The actual reduction rate of the difference in clutch rotational number becomes small (a negative number) since the difference in clutch rotational number increases. This results in a large value of difference between the target value and the actual reduction rate, so that a large value of clutch connecting speed is set (refer to Fig. 10). Accordingly, the clutch 54 is rapidly connected during the operation of the accelerator and the increase of the engine rotational number (in an area D in the drawing).

As described above, in the motorcycle 10 in Embodiment 1, the clutch 54 is arranged to be rapidly connected when an operation of the accelerator is carried out during the half-clutch control and the throttle opening becomes large. Accordingly, the vehicle speed performance of following the operation of the accelerator is improved. This results in improvement in feeling in a ride.

As described above, in the motorcycle 10 in Embodiment 1, the speed for connecting the clutch 54 is set so that the actual reduction rate of the difference in clutch rotational number would approach the target value in the half-clutch control, so that the clutch 54 can be connected smoothly. This allows the feeling in a ride to be improved.

Further, in the motorcycle 10 in Embodiment 1, the larger the difference between the target value of the reduction rate of the difference in clutch rotational number and the actual reduction rate of the difference in clutch rotational number is, the larger a value of the speed for connecting the clutch 54 to be set is. Accordingly, the clutch 54 can be smoothly connected even in the case of wear of the clutch 54 or an individual variation of the clutch 54. This allows the feeling in a ride to be improved.

Moreover, in the motorcycle 10 in Embodiment 1, the larger the throttle opening detected by means of the throttle opening sensor 50 is, the higher the target value to be set is. This allows the vehicle speed performance of following the operation of the accelerator to be improved in the case that the operation of the accelerator is carried out during the half-clutch control. This results in improvement in feeling in a ride.

In Embodiment 1, described has been a case that the actual reduction rate is calculated on the basis of the engine rotational number detected by means of the engine rotational number sensor 53 and the rotational number of the main shaft calculated on the basis of a result of the detection by means of the vehicle speed sensor 69. A method of calculating the actual reduction rate, however, is not limited to that of Embodiment 1.

For example, a wheel rim of the rear wheel 26, which is used as a driving wheel, may be provided with a wheel rotational number sensor for detecting the wheel rotational number (not shown) to calculate the rotational number of the main shaft on the basis of the wheel rotational number detected by means of the wheel rotational number sensor, a speed-reduction ratio obtained from the current stage of the transmission gears and a speed-reduction ratio of the driving shaft 58 and the rear wheel 28. The difference in clutch rotational number may be calculated on the basis of the calculated rotational number of the main shaft and the engine rotational number detected by means of the engine rotational number sensor 53 to calculate the actual reduction rate on the basis of the calculated difference in clutch rotational number. In this case, the speed-reduction ratio of the driving shaft 58 and the rear wheel 28 can be measured in advance to be stored in the ROM 91 or the like. The speed-reduction ratio of the driving shaft 58 and the rear wheel 28 is constant as mentioned above. Accordingly, the rotational number of the main shaft is calculated substantially on the basis of the speed-reduction ratio obtained from the wheel rotational number and the current stage of the transmission gears.

Furthermore, it may be arranged that a difference between the engine rotational number and the rotational number of the main shaft is calculated on the basis of the engine rotational number detected by means of the engine rotational number sensor 53 and the rotational number of the main shaft detected by means of the main shaft rotational number sensor 56 to calculate the difference in clutch rotational number on the basis of which the actual reduction rate is calculated, for example.

In the case that the rotational number of the main shaft is calculated on the basis of a result of the detection by means of the vehicle speed sensor 69 as in Embodiment 1, obtained can be an effect that the main shaft rotational number sensor 56 can be omitted. It may be also arranged that the actual reduction rate be obtained only on the basis of a result of detection by means of the engine rotational number sensor 53 since increase and decrease in engine rotational number are substantially accorded with increase and decrease in difference in clutch rotational number (refer to Figs. 11 to 13).

Moreover, in Embodiment 1, the target value setting table is for defining a relation between the throttle opening and the target value and the description has been made for the case that the motorcycle 10 is arranged so that the target value would be set on the basis of the throttle opening. The present teaching, however, is not limited to the above. In the present embodiment, the target value setting table may define a relation between the engine rotational number and the target value and a saddle riding type vehicle may be arranged so that the target value would be set on the basis of the engine rotational number, for example.

In addition, in Embodiment 1, described has been a case that one kind of connection speed setting table is stored. In the present embodiment, however, plural kinds of connection speed setting table may be stored. For example, plural kinds of connection speed setting table corresponding to a stage of the transmission gears to which the gear is shifted may be stored or two kinds of connection speed setting table respectively corresponding to shift-up and shift-down may be stored.

### Embodiment 2

In Embodiment 2, described will be a case that the clutch connecting speed is set on the basis of the actual reduction rate of the engine rotational number (also referred to as an actual rotational number reduction rate, hereinafter) and the target value of the reduction rate of the engine rotational number (also referred to as a target value simply, hereinafter) in the half-clutch control.

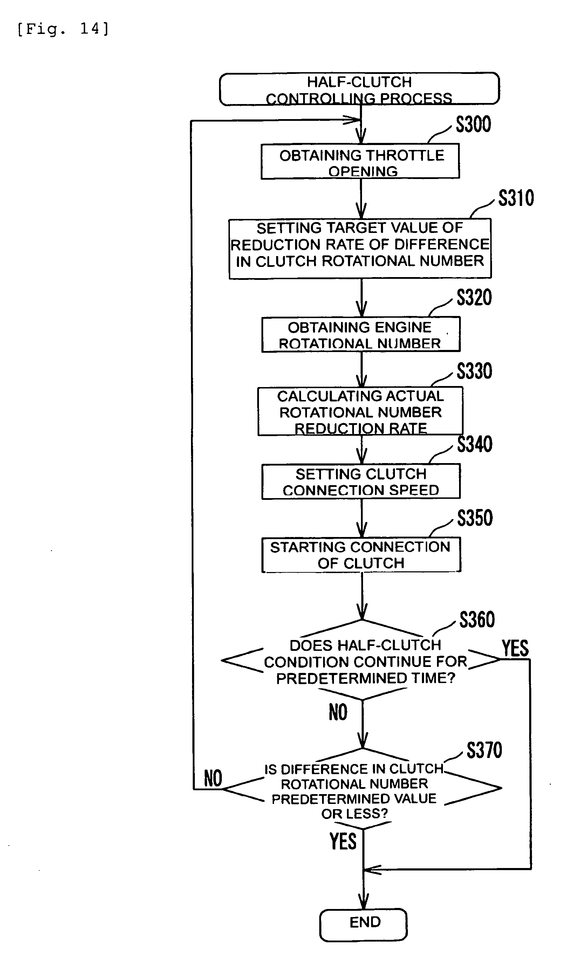

Fig. 14 is a flowchart showing a half-clutch controlling process in Embodiment 2. The respective devices and members, which form the motorcycle in Embodiment 2, are similar to those of the motorcycle 10 in Embodiment 1. Accordingly, the description thereof will be omitted. When the half-clutch control process in Embodiment 2 is started, performed is first a process of obtaining the throttle opening in Step S300. Description of this process will be omitted since the process is similar to that of Step S200 in the half-clutch control process shown in Fig. 8.

After the process in Step S300 is executed, the target value of the reduction rate of the engine rotational number is then set in Step S310. In this process, the ECU 100 performs a process of setting the target value of the reduction rate of the rotational number of the engine included in the engine unit 28. The target value is set on the basis of the target value setting table stored in the ROM 91 or such.

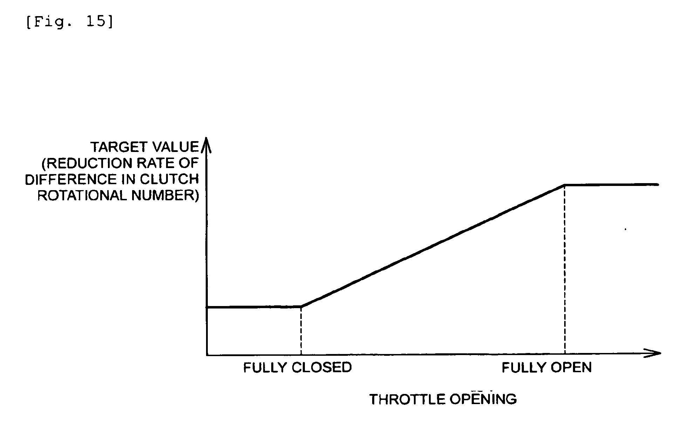

Fig. 15 shows an example of the target value setting table referred to in the process in Step S310. In Fig. 15, the horizontal axis shows the throttle opening while the vertical axis shows the target value to be set. As shown in Fig. 15, the larger the throttle opening detected by means of the throttle opening sensor 50 is, the larger the target value to be set is.

After the process in Step S310 is executed, a process of obtaining the engine rotational number is then performed in Step S320. Description of this process will be omitted since the process is similar to the process in Step S220 in the flowchart shown in Fig. 8.

After the process in Step S320 is executed, the actual rotational number reduction rate is then calculated in Step S330. The actual rotational number reduction rate is a substantial reduction rate of the engine rotational number and obtained on the basis of an actual result of the detection by means of the engine rotational number sensor 53. In this process, the ECU 100 calculates the actual rotational number reduction rate on the basis of the engine rotational number obtained in the process in Step S320 and the engine rotational number obtained in the process in Step S320 having been executed predetermined time before.

After the process in Step S330 is executed, a process of setting a clutch connecting speed is then performed in Step S340. In this process, the ECU 100 sets the speed for connecting the clutch 54 on the basis of the target value set in the process in Step S310, the actual rotational number reduction rate calculated in the process in Step S330 and a connecting speed setting table stored in the ROM 91 or such.

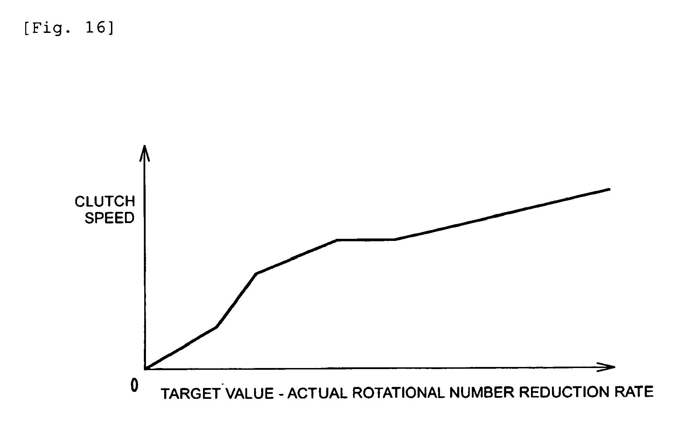

Fig. 16 shows an example of the connecting speed setting table. In Fig. 16, the horizontal axis shows the difference between the target value set in the process in Step S310 and the actual rotational number reduction rate calculated in the process in Step S330 while the vertical axis shows the speed for connecting the clutch 54. As show in Fig. 16, in the motorcycle in Embodiment 2, the larger the difference between the target value and the actual rotational number reduction rate is, the larger the clutch connecting speed to be set is.

After the process in Step S340 is executed, connection of the clutch is then started in Step S350. In this step, the ECU 100 makes the clutch actuator 63 connect the clutch 54 at the clutch connecting speed set in the process in Step S340.

After the process in Step S350 is executed, it is then judged in Step S360 whether or not the predetermined half-clutch condition has been continued for predetermined time. In Embodiment 2, the predetermined half-clutch condition is set at a condition that the difference between the target value and the actual rotational number reduction rate is within a predetermined range and that the reduction rate of the difference in clutch rotational number is a predetermined value or less. In this process, the ECU 100 judges whether or not the half-clutch condition has been continued for predetermined time. The ECU 100 completes the half-clutch control process when it judges that the half-clutch condition has been continued for predetermined time.

The judgment on continuance of the half-clutch condition is not limited to the one based on elapse of time but may be the one based on physical quantity equivalent to the time. It may be based on physical quantity varying in a single meaning in accordance with progress of a phenomenon. For example, the judgment on continuance of the half-clutch condition may by on the basis of a total value of the engine rotational number or such. Elapse of time is short in the case that the engine rotational number is large while it is long in the case of small engine rotational number even when the total value of the engine rotational number is same. Accordingly, the total value of the engine rotational number is not necessarily accorded with the time elapsed. The "continuance" in the above context, however, may be on the basis of such a total value of the engine rotational number or the like.

On the other hand, in the case that the half-clutch condition is not judged to have been continued for predetermined time in Step S360, it is judged in Step S370 that the difference in clutch rotational number reaches a predetermined value or less. When it is judged that the difference in clutch rotational number does not reach the predetermined value or less, the process is returned to Step S300. On the other hand, the half-clutch controlling process is completed when the difference in clutch rotational number is judged to reach the predetermined value or less.

As described above, in accordance with the motorcycle in Embodiment 2, the speed for connecting the clutch 54 is set so that the reduction rate of the engine rotational number would approach to the target value in the half-clutch control. This allows the clutch 54 to be smoothly connected, so that an effect that the feeling in a ride can be improved similarly to the case in Embodiment 1 can be obtained.

As described above with Figs. 14 to 16, in the case of controlling the clutch connecting speed with the actual rotational number reduction rate being referred to, the difference in clutch rotational number is likely not to be reduced in accordance with reduction of the engine rotational number although the engine rotational number has been reduced, depending on the condition of the vehicle, even when the actual rotational number reduction rate is close to the target value.

As an example of such a case, described will be a case that the brakes are slammed just after a shift-up operation with the accelerator pressed on an ascent. The actual rotational number reduction rate is increased slowly so as to approach the target value after suddenly braking (the engine rotational number is decreased) while the vehicle speed falls suddenly. As a result, the speed of decreasing in rotational number of the main shaft becomes larger than that of the engine rotational number, so that the difference in clutch rotational number increases. That is to say, the difference in clutch rotational number increases although the engine rotational number decreases. In such a condition, the actual rotational number reduction rate is substantially equal to the target value and the clutch connecting speed is substantially 0 (refer to Fig. 16). Accordingly, the difference in clutch rotational number increases while the clutch position is maintained. This causes the half-clutch condition to last long time without moving the process to the clutch connecting process (refer to Step S160 in Fig. 7).

In Embodiment 2, however, it is arranged that the continuance of the half-clutch condition for predetermined time be judged on the basis of the reduction rate of the engine rotational number and the reduction rate of the difference in clutch rotational number in the process of Step S360 in the half-clutch controlling process shown in Fig. 14 and the half-clutch control be completed to move the process to the clutch connecting process (refer to Step S160 in Fig. 7) when the half-clutch condition is judged to have been continued for the predetermined time. Accordingly, the half-clutch condition can be prevented from lasting long time although the engine rotational number is reduced. The clutch 54 is preferably connected at a low speed in the clutch connecting process after the half-clutch condition is judged to have been continued for the predetermined time. This is because a shock can be reduced in connecting the clutch.

In Embodiment 2, described has been also the case that one kind of connection speed setting table is stored. Plural kinds of connection speed setting table, however, may be stored similarly to the case of Embodiment 1. For example, it is possible to store plural kinds of connection speed setting table corresponding to a stage of the transmission gears to which the gear is shifted or to store two kinds of connection speed setting table respectively corresponding to shift-up and shift-down.

As described above, the invention is useful to an automatic gearshift control device and vehicle.

The description above discloses (amongst others), an embodiment of an automatic gearshift control device comprising: a friction clutch provided between a driving side power transmission mechanism and a driven side power transmission mechanism; a transmission; an automatic gearshift device including an electrically-driven actuator for performing on and off of the friction clutch and for shifting gears of the transmission; a reduction rate obtaining device for obtaining a reduction rate of a difference in clutch rotational number defined on the basis of a difference between the driving side rotational number and the driven side rotational number, the driving side rotational number being a rotational number of a driving side part of the friction clutch or the driving side power transmission mechanism and the driven side rotational number being a rotational number of a driven side part of the friction clutch or the driven side power transmission mechanism; a connecting speed setting device for setting a speed for connecting the friction clutch so that the reduction rate of the difference in clutch rotational number, the reduction rate being obtained by means of the reduction rate obtaining device, would reach a predetermined target value; and a control device for controlling drive of the actuator so as to connect the friction clutch at the connection speed set by means of the connecting speed setting device.

In accordance with this automatic gearshift control device, the speed for connecting the friction clutch is arranged to be determined so that the obtained reduction rate of the difference in clutch rotational number would approach a predetermined target value. For example, the speed for connecting the friction clutch is increased to make the reduction rate large in the case that the obtained reduction rate is smaller than the target value while the friction clutch is stopped or disconnected in the case that the obtained reduction rate is larger than the target value, contrary to the above. Performing such a half-control allows the feeling in connecting the friction clutch to be smooth even in the case of a change in coefficient of friction between the friction members. Further, the vehicle speed performance of following an operation of an accelerator is improved when the accelerator is operated in the half-clutch. This results in improvement in feeling in a ride. Moreover, variously setting the target value or the speed for connecting the friction clutch in making the reduction rate of the difference in clutch rotational number approach the target value allows the feeling in a ride to correspond to a taste of a rider.

In accordance with this embodiment, feeling in a ride can be improved in a vehicle in which off and on of a friction clutch and shifting of gears of a transmission are automatically performed.

The description above further discloses, according to a preferred first aspect, an automatic gearshift control device comprising: a friction clutch provided between a driving side power transmission mechanism and a driven side power transmission mechanism; a transmission; an automatic gearshift device including an electrically-driven actuator for performing on and off of the friction clutch and for shifting gears of the transmission; a reduction rate obtaining device for obtaining a reduction rate of a difference in clutch rotational number defined on the basis of a difference between the driving side rotational number and the driven side rotational number, the driving side rotational number being a rotational number of a driving side part of the friction clutch or the driving side power transmission mechanism and the driven side rotational number being a rotational number of a driven side part of the friction clutch or the driven side power transmission mechanism; a connecting speed setting device for setting a speed for connecting the friction clutch so that the reduction rate of the difference in clutch rotational number, the reduction rate being obtained by means of the reduction rate obtaining device, would reach a predetermined target value; and a control device for controlling drive of the actuator so as to connect the friction clutch at the connection speed set by means of the connecting speed setting device.

Further, according to a preferred second aspect, the larger the difference between the target value and the reduction rate of the difference in clutch rotational number, the reduction rate being obtained by means of the reduction rate obtaining device, is, the larger the connecting speed setting device sets the speed for connecting the friction clutch.

Further, according to a preferred third aspect, a throttle opening detecting device for detecting a throttle opening is provided, wherein the target value is set in accordance with the throttle opening detected by means of the throttle opening detecting device.

Further, according to a preferred fourth aspect, the larger the throttle opening detected by means of the throttle opening detecting device is, the higher the target value is set.

Further, according to a preferred fifth aspect, the automatic gearshift control device may include an engine provided on the driving side of the friction clutch and a main shaft provided on the driven side of the friction clutch, the automatic gearshift control device comprising: an engine rotational number obtaining device for obtaining an engine rotational number; and a main shaft rotational number obtaining device for obtaining a main shaft rotational number, wherein the reduction rate obtaining device calculates the reduction rate of the difference in clutch rotational number on the basis of the engine rotational number obtained by means of the engine rotational number obtaining device and the main shaft rotational number obtained by means of the main shaft rotational number obtaining device.

Further, according to a preferred sixth aspect, the engine includes a crankshaft and the engine rotational number obtaining device is an engine rotational number sensor for detecting a rotational number of the crankshaft of the engine.

Further according to a preferred seventh aspect, the main shaft rotational number obtaining device is a main shaft rotational number sensor provided on the main shaft.

Further, according to a preferred eighth aspect, the main shaft is connected to a driving shaft through the transmission and the main shaft rotational number obtaining device includes a vehicle speed sensor provided on the driving shaft to calculate a main shaft rotational number on the basis of the drive shaft rotational number detected by means of the vehicle speed sensor and the stage of gears in the transmission.

Further, according to a preferred ninth aspect, the automatic gearshift control device is mounted to a vehicle including a driving wheel, wherein the main shaft rotational number obtaining device comprises a driving wheel rotational number sensor for detecting the rotational number of the driving wheel to calculate the main shaft rotational number on the basis of the rotational number of the driving wheel detected by means of the driving wheel rotational number sensor and the stage of gears in the transmission.

Further, according to a preferred tenth aspect, there is provided an automatic gearshift control device mounted to a vehicle including an engine, the automatic gearshift control device comprising: a friction clutch; a transmission; an automatic gearshift device including an electrically-driven actuator for performing on and off of the friction clutch and for shifting gears of the transmission; a rotational number reduction rate obtaining device for obtaining the reduction rate of the engine rotational number; a connecting speed setting device for setting a speed for connecting the friction clutch so that the reduction rate of the engine rotational number obtained by means of the rotational number reduction rate obtaining device would reach a predetermined target value; and a control device for controlling drive of the actuator so as to connect the friction clutch at the connection speed set by means of the connecting speed setting device.

Further, according to a preferred eleventh aspect, the friction clutch is provided between a driving side power transmission mechanism and a driven side power transmission mechanism and the control device stops setting the connection speed by means of the connection speed setting device to control drive of the actuator so as to connect the friction clutch when a condition that a difference between the target value and the reduction rate of the engine rotational number obtained by means of the rotational number reduction rate obtaining device is within a predetermined range and the reduction rate of a difference in clutch rotational number is a predetermined value or less is continued wherein a difference between a driving side rotational number and a driven side rotational number, the driving side rotational number being a rotational number of a driving side part of the friction clutch or the driving side power transmission mechanism and the driven side rotational number being a rotational number of a driven side part of the friction clutch or the driven side power transmission mechanism, is the difference in clutch rotational number.

Further, according to a preferred twelfth aspect, there is provided a vehicle comprising the automatic gearshift control device according to one of the first to eleventh aspects.

Further, according to a preferred thirteenth aspect, the vehicle is a saddle riding type vehicle.

The description above still further discloses, as a particularly preferred embodiment, in order to provide an automatic gearshift control device capable of improving the feeling in a ride, that a target value of a reduction rate of a difference in clutch rotational number is set on the basis of a result of detection by means of a throttle opening sensor and the target value setting table in half-clutch control (in Step S210), that then the difference in clutch rotational number is calculated on the basis of an engine rotational number detected by means of an engine rotational number sensor and a main shaft rotational number calculated on the basis of a driving shaft rotational number detected by means of a vehicle speed sensor (in Step S250) to calculate an actual reduction rate of the difference in clutch rotational number (in Step S260), and that on the basis of the difference between the set target value and the calculated actual reduction rate, set is a speed for connecting the clutch so that the actual reduction rate would approach the target value (in Step S270).

## Claims

1. Method to automatically control a power transmission of a vehicle, performing on and off operation of a friction clutch (54) provided between a driving side power transmission mechanism and a driven side power transmission mechanism, and shifting of gears of a transmission (80), wherein
a clutch connecting speed is controlled on the basis of an actual value of a reduction rate of a difference in rotational numbers of the driving side power transmission mechanism and the driven side power transmission mechanism, wherein, during half-clutch control, the connecting speed for connecting the friction clutch (54) is set on the basis of the difference between a target value of the reduction rate of a difference in rotational numbers of the driving side power transmission mechanism and the driven side power transmission mechanism and the actual value of a reduction rate of a difference in rotational numbers of the driving side power transmission mechanism and the driven, side power transmission mechanism, such that the connecting speed for connecting the friction clutch (54) is set so that the reduction rate of the difference in clutch rotational number approaches a predetermined target value.

2. Method to automatically control a power transmission of a vehicle according to claim 1, **characterized in that** the reduction rate is obtained by determining a reduction rate of a difference in clutch rotational number defined on the basis of a difference between the driving side rotational number and the driven side rotational number, the driving side rotational number being a rotational number of a driving side part of the friction clutch (54) or the driving side power transmission mechanism and the driven side rotational number being a rotational number of a driven side part of the friction clutch (54) or the driven side power transmission mechanism.

3. Method to automatically control a power transmission of a vehicle according to claim 1 or 2, **characterized in that** the larger the difference between the target value and the actual value of the reduction rate of the difference in clutch rotational number is, the larger the speed for connecting the friction clutch (54) is set.

4. Method to automatically control a power transmission of a vehicle according to at least one of the claims 1 to 3, **characterized in that** the target value is set in accordance with a throttle opening.

5. Method a to automatically control a power transmission of a vehicle according to claim 4, **characterized in that** the larger the throttle opening is, the higher the target value is set.

6. Method to automatically control a power transmission of a vehicle according to one of the claims 1 to 5, **characterized in that** an engine (28) is provided on the driving side of the friction clutch (54) and a main shaft (55) is provided on the driven side of the friction clutch (54), and wherein during the automatic gearshift control an engine rotational number and a main shaft rotational number are obtained, and wherein the reduction rate of the difference in clutch rotational number is calculated on the basis of the engine rotational number and the main shaft rotational number.

7. Method to automatically control a power transmission of a vehicle according to claim 6, **characterized in that** the engine (28) includes a crankshaft (52), and wherein a rotational number of the crankshaft (52) of the engine (28) is detected by an engine rotational number sensor (53).

8. Automatic gearshift control device comprising:
a friction clutch (54) provided between a driving side power transmission mechanism and a driven side power transmission mechanism;
a transmission (80);
an automatic gearshift device including an electrically-driven actuator for performing on and off of the friction clutch (54) and for shifting gears of the transmission (80);
a reduction rate obtaining device for obtaining an actual value of a reduction rate of a difference in clutch rotational number defined on the basis of a difference between the driving side rotational number and the driven side rotational number, the driving side rotational number being a rotational number of a driving side part of the friction clutch (54) or the driving side power transmission mechanism and the driven side rotational number being a rotational number of a driven side part of the friction clutch (54) or the driven side power transmission mechanism;
**characterized by** a connecting speed setting device which during half-clutch control, sets the connecting speed for connecting the friction clutch (54) on the basis of the difference between a target value of the reduction rate of a difference in rotational numbers of the driving side power transmission mechanism and the driven side power transmission mechanism and the actual value of a reduction rate of a difference in rotational numbers of the driving side power transmission mechanism and the driven side power transmission mechanism, such that the connecting speed for connecting the friction clutch (54) is set so that the reduction rate of the difference in clutch rotational number approaches a predetermined target value.

9. Automatic gearshift control device according to claim 8, **characterized in that** the larger the difference between the target value and the actual value of the reduction rate of the difference in clutch rotational number, the reduction rate being obtained by means of the reduction rate obtaining device, is, the larger the connecting speed setting device sets the speed for connecting the friction clutch (54).

10. Automatic gearshift control device according to claim 8 or 9, **characterized by** a throttle opening detecting device (50) for detecting a throttle opening, wherein the target value is set in accordance with the throttle opening detected by means of the throttle opening detecting device (50).

11. Automatic gearshift control device according to claim 10, **characterized in that** the larger the throttle opening detected by means of the throttle opening detected device (50) is; the higher the target value is set.

12. Automatic gearshift control device according to one of the claims 8 to 11, **characterized by** an engine (28) provided on the driving side of the friction clutch (54) and a main shaft (55) provided on the driven side of the friction clutch (54), the automatic gearshift control device further comprising:
an engine rotational number obtaining device (53) for obtaining an engine rotational number; and
a main shaft rotational number obtaining device (56) for obtaining a main shaft rotational number, wherein
the reduction rate obtaining device calculates the reduction rate of the difference in clutch rotational number on the basis of the engine rotational number obtained by means of the engine rotational number obtaining device (53) and the main shaft rotational number obtained by means of the main shaft rotational number obtaining device (56).

13. Automatic gearshift control device according to claim 12, **characterized in that** the engine (28) includes a crankshaft (52) and the engine rotational number obtaining device is an engine rotational number sensor (53) for detecting a rotational number of the crankshaft (52) of the engine (28).

14. Automatic gearshift control device according to claim 12 or 13, **characterized in that** wherein the main shaft rotational number obtaining device is a main shaft rotational number sensor (56) provided on the main shaft (55).

15. Automatic gearshift control device according to one of the claims 12 to 14, **characterized in that** the main shaft (55) is connected to a driving shaft (58) through the transmission (80) and the main shaft rotational number obtaining device includes a vehicle speed sensor (69) provided on the driving shaft (58) to calculate a main shaft rotational number on the basis of the drive shaft rotational number detected by means of the vehicle speed sensor (69) and the stage of gears in the transmission (80).

16. Automatic gearshift control device according to one of the claims 12 to 15, **characterized in that** the automatic gearshift control device is mounted to a vehicle including a driving wheel, and wherein the main shaft rotational number obtaining device comprises a driving wheel rotational number sensor for detecting the rotational number of the driving wheel to calculate the main shaft rotational number on the basis of the rotational number of the driving wheel detected by means of the driving wheel rotational number sensor and the stage of gears in the transmission (80).

## Patentansprüche

1. Verfahren zur automatischen Steuerung einer Leistungsübertragung eines Fahrzeuges, das einen Ein- oder Aus- Betrieb einer Reibungskupplung (54) ausführt, angeordnet zwischen einer antriebsseitigen Leistungsübertragungsvorrichtung und einer abtriebsseitigen Leistungsübertragungsvorrichtung, und Schalten von Zahnrädern eines Getriebes (80), wobei
eine Kupplungsverbindungsgeschwindigkeit gesteuert wird auf der Grundlage eines tatsächlichen Wertes einer Verminderungsrate einer Differenz in den Drehzahlen der antriebsseitigen Leistungsübertragungsvorrichtung und der abtriebsseitigen Leistungsübertragungsvorrichtung, wobei während einer Halb- Kupplungssteuerung die Verbindungsgeschwindigkeit zum Verbinden der Reibungskupplung (54) auf der Grundlage der Differenz zwischen einem Zielwert der Verminderungsrate einer Differenz in den Drehzahlen der antriebsseitigen Leistungsübertragungsvorrichtung und der abtriebsseitigen Leistungsübertragungsvorrichtung und dem tatsächlichen Wert einer Verminderungsrate einer Differenz in den Drehzahlen der antriebsseitigen Leistungsübertragungsvorrichtung und der abtriebsseitigen Leistungsübertragungsvorrichtung festgelegt wird, derart, dass die Verbindungsgeschwindigkeit zum Verbinden der Reibungskupplung (54) festgelegt wird derart, dass die Verminderungsrate der Differenz in der Kupplungsdrehzahl einen vorbestimmten Zielwert erreicht.

2. Verfahren zur automatischen Steuerung einer Leistungsübertragung eines Fahrzeuges nach Anspruch 1, **dadurch gekennzeichnet, dass** die Verminderungsrate erhalten wird durch Bestimmen einer Verminderungsrate einer Differenz in der Kupplungsdrehzahl, gebildet auf der Grundlage der Differenz zwischen der antriebsseitigen Drehzahl und der abtriebsseitigen Drehzahl, wobei die antriebsseitige Drehzahl eine Drehzahl eines antriebsseitigen Teils der Reibungskupplung (54) oder der antriebsseitigen Leistungsübertragungsvorrichtung ist, und die abtriebsseitige Drehzahl eine Drehzahl eines abtriebsseitigen Teils der Reibungskupplung (54) oder der abtriebsseitigen Leistungsübertragungsvorrichtung ist.

3. Verfahren zur automatischen Steuerung einer Leistungsübertragung eines Fahrzeuges nach Anspruch 1 oder 2, **dadurch gekennzeichnet, dass** je größer die Differenz zwischen dem Zielwert und dem tatsächlichen Wert der Verminderungsrate der Differenz in der Kupplungsdrehzahl ist, desto größer die Drehzahl zum Verbinden der Reibungskupplung (54) festgelegt wird.

4. Verfahren zur automatischen Steuerung einer Leistungsübertragung eines Fahrzeuges nach zumindest einem der Ansprüche 1 bis 3, **dadurch gekennzeichnet, dass** der Zielwert in Übereinstimmen mit einer Drosselöffnung festgelegt wird.

5. Verfahren zur automatischen Steuerung einer Leistungsübertragung eines Fahrzeuges nach Anspruch 4, **dadurch gekennzeichnet, dass** je größer die Drosselöffnung ist, desto höher der Zielwert festgelegt wird.

6. Verfahren zur automatischen Steuerung einer Leistungsübertragung eines Fahrzeuges nach zumindest einem der Ansprüche 1 bis 5, **dadurch gekennzeichnet, dass** ein Motor (28) angeordnet ist auf der Antriebsseite der Reibungskupplung (54) und eine Hauptwelle (56) angeordnet ist auf der angetriebenen Seite der Reibungskupplung (54), und wobei während der automatischen Schaltsteuerung eine Motordrehzahl und einer Hauptwellendrehzahl erhalten werden und wobei die Verminderungsrate der Differenz in der Kupplungsdrehzahl auf der Grundlage der Motordrehzahl und der Hauptwellendrehzahl berechnet wird.

7. Verfahren zur automatischen Steuerung einer Leistungsübertragung eines Fahrzeuges nach Anspruch 6, **dadurch gekennzeichnet, dass** der Motor (28) eine Kurbelwelle (52) enthält und wobei eine Drehzahl der Kurbelwelle (52) des Motors (28) durch einen Motordrehzahlsensor (53) erfasst wird.

8. Automatische Schaltsteuervorrichtung, aufweisend:
eine Reibungskupplung (54), angeordnet zwischen einer antriebsseitigen Leistungsübertragungsvorrichtung und der abtriebsseitigen Leistungsübertragungsvorrichtung;
ein Getriebe (80);
eine automatische Schaltvorrichtung, die einen elektrisch angetriebenen Betätiger zum Ausführen von Einschalten oder Ausschalten der Reibungskupplung (54) und zum Schalten von Gängen des Getriebes (80) enthält;
eine Vorrichtung zum Erhalten der Verminderungsrate zum Erhalten eines tatsächlichen Wertes einer Verminderungsrate einer Differenz in der Kupplungsdrehzahl, gebildet auf der Grundlage einer Differenz zwischen der antriebsseitigen Drehzahl und der abtriebsseitigen Drehzahl, und der antriebsseitigen Drehzahl, die eine Drehzahl eines antriebsseitigen Teils der Reibungskupplung (54) oder der antriebsseitigen Leistungsübertragungsvorrichtung ist, und die abtriebsseitige Drehzahl, die eine Drehzahl eines abtriebsseitigen Teils der Reibungskupplung (54) oder der abtriebsseitigen Leistungsübertragungsvorrichtung ist; **gekennzeichnet durch** eine Verbindungsgeschwindigkeit- Festlegungsvorrichtung, die während der Halb- Kupplungssteuerung die Verbindungsgeschwindigkeit zum Verbinden der Reibungskupplung (54) auf der Grundlage der Differenz zwischen einem Zielwert der Verminderungsrate einer Differenz in den Drehzahlen der antriebsseitigen Leistungsübertragungsvorrichtung und der abtriebsseitigen Leistungsübertragungsvorrichtung und dem tatsächlichen Wert einer Verminderungsrate einer Differenz in den Drehzahlen der antriebsseitigen Leistungsübertragungsvorrichtung und der abtriebsseitigen Leistungsübertragungsvorrichtung festlegt, derart, dass die Verbindungsgeschwindigkeit zum Verbinden der Reibungskupplung (54) festgelegt wird, so dass die Verminderungsrate der Differenz in der Kupplungsdrehzahl sich einem vorbestimmten Zielwert annähert.

9. Automatische Schaltsteuervorrichtung nach Anspruch 8, **dadurch gekennzeichnet, dass** je größer die Differenz zwischen dem Zielwert und dem tatsächlichen Wert der Verminderungsrate der Differenz in der Kupplungsdrehzahl ist, desto größer legt die Verbindungsgeschwindigkeit- Festlegungsvorrichtung die Geschwindigkeit zum Verbinden der Reibungskupplung (54) fest, wobei die Verminderungsrate mittels der Vorrichtung zum Erhalten der Verminderungsrate erhalten wird.

10. Automatische Schaltsteuervorrichtung nach Anspruch 8 oder 9, **gekennzeichnet durch** eine Drosselöffnungs- Erfassungsvorrichtung (50) zum Erfassen einer Drosselöffnung, wobei der Zielwert in Übereinstimmung mit der Drosselöffnung, erfasst mittels der Drosselöffnungs- Erfassungsvorrichtung (50), festgelegt wird.

11. Automatische Schaltsteuervorrichtung nach Anspruch 10, **dadurch gekennzeichnet, dass** je größer die Drosselöffnung, erfasst durch die Drosselöffnungs-Erfassungsvorrichtung (50), ist, desto höher der Zielwert festgelegt wird.

12. Automatische Schaltsteuenrorrichtung nach einem der Ansprüche 8 bis 11, **gekennzeichnet durch** einen Motor (28), angeordnet auf der Antriebsseite der Reibungskupplung (54), und eine Hauptwelle (55), angeordnet auf der Abtriebsseite der Reibungskupplung (54), wobei die automatische Schaltsteuervorrichtung außerdem aufweist:
eine Vorrichtung (53) zum Erhalten der Motordrehzahl; und
eine Vorrichtung zum Erhalten der Hauptwellendrehzahl (56) zum Erhalten einer Hauptwellendrehzahl; wobei
die Vorrichtung zum Erhalten der Verminderungsrate die Verminderungsrate der Differenz in der Kupplungsdrehzahl berechnet auf der Grundlage der Motordrehzahl, erhalten mittels der Vorrichtung zum Erhalten der Motordrehzahl (53), und
der Hauptwellendrehzahl, erhalten mittels der Vorrichtung zum Erhalten der Hauptwellendrehzahl (56).

13. Automatische Schaltsteuervorrichtung nach Anspruch 12, **dadurch gekennzeichnet, dass** der Motor (28) eine Kurbelwelle (52) enthält und die Vorrichtung zum Erhalten der Motordrehzahl ein Motordrehzahlsensor (53) zum Erfassen einer Drehzahl der Kurbelwelle (52) des Motors (28) ist.

14. Automatische Schaltsteuervorrichtung nach Anspruch 12 oder 13, **dadurch gekennzeichnet, dass** wobei die Vorrichtung zum Erhalten der Hauptwellendrehzahl ein Hauptwellendrehzahlsensor (56), angeordnet auf der Hauptwelle (55), ist.

15. Automatische Schaltsteuervorrichtung nach einem der Ansprüche 12 bis 14, **dadurch gekennzeichnet, dass** die Hauptwelle (55) mit einer Antriebswelle (58) durch das Getriebe (80) verbunden ist und die Vorrichtung zum Erhalten der Hauptwellendrehzahl einen Fahrzeuggeschwindigkeitssensor (69) enthält, angeordnet auf der Antriebswelle (58), um eine Hauptwellendrehzahl auf der Grundlage der Antriebswellendrehzahl, erfasst mittels des Fahrzeuggeschwindigkeitssensors (69) und der Gangstufe in dem Getriebe (80), zu berechnen.

16. Automatische Schaltsteuervorrichtung nach einem der Ansprüche 12 bis 15, **dadurch gekennzeichnet, dass** die automatische Schaltsteuervorrichtung an einem Fahrzeug, das ein Antriebsrad enthält, montiert ist, und wobei die Vorrichtung zum Erhalten der Hauptwellendrehzahl einen Antriebsrad- Drehzahlsensor zum Erfassen der Drehzahl des Antriebsrades aufweist, um die Hauptwellendrehzahl auf der Grundlage der Drehzahl des Antriebsrades, erfasst mittels des Antriebsrad- Drehzahlsensors, und der Gangstufe in dem Getriebe (80), zu berechnen.

## Revendications

1. Procédé pour commander automatiquement une transmission de puissance d'un véhicule réalisant une opération de marche et d'arrêt d'un embrayage à friction (54) prévu entre un mécanisme de transmission de puissance de côté entraînant et un mécanisme de transmission de puissance de côté entraîné, et un changement de vitesses d'une boîte de vitesses (80), dans lequel
une vitesse de connexion d'embrayage est commandée sur la base d'une valeur réelle d'un rapport de réduction d'une différence de nombres de rotations du mécanisme de transmission de puissance de côté entraînant et du mécanisme de transmission de puissance de côté entraîné, dans lequel, au cours de la semi-commande d'embrayage, la vitesse de connexion pour connecter l'embrayage à friction (54) est réglée sur la base de la différence entre une valeur cible du rapport de réduction d'une différence de nombres de rotations du mécanisme de transmission de puissance de côté entraînant et du mécanisme de transmission de puissance de côté entraîné et la valeur réelle d'un rapport de réduction d'une différence de nombres de rotations du mécanisme de transmission de puissance de côté entraînant et du mécanisme de transmission de puissance de côté entraîné, de sorte que la vitesse de connexion pour connecter l'embrayage à friction (54) soit réglée pour que le rapport de réduction de la différence de nombre de rotations d'embrayage se rapproche d'une valeur cible prédéterminée.

2. Procédé pour commander automatiquement une transmission de puissance d'un véhicule selon la revendication 1, **caractérisé en ce que** le rapport de réduction est obtenu en déterminant un rapport de réduction d'une différence de nombre de rotations d'embrayage définie sur la base d'une différence entre le nombre de rotations de côté entraînant et le nombre de rotations de côté entraîné, le nombre de rotations de côté entraînant étant un nombre de rotations d'une partie de côté entraînant de l'embrayage à friction (54) ou du mécanisme de transmission de puissance de côté entraînant et le nombre de rotations de côté entraîné étant un nombre de rotations d'une partie de côté entraîné de l'embrayage à friction (54) ou du mécanisme de transmission de puissance de côté entraîné.

3. Procédé pour commander automatiquement une transmission de puissance d'un véhicule selon la revendication 1 ou 2, **caractérisé en ce que** plus la différence entre la valeur cible et la valeur réelle du rapport de réduction de la différence de nombre de rotations d'embrayage est importante, plus la vitesse pour connecter l'embrayage à friction (54) réglée est importante.

4. Procédé pour commander automatiquement une transmission de puissance d'un véhicule selon au moins une des revendications 1 à 3, **caractérisé en ce que** la valeur cible est réglée conformément à une ouverture de papillon des gaz.

5. Procédé pour commander automatiquement une transmission de puissance d'un véhicule selon la revendication 4, **caractérisé en ce que** plus l'ouverture de papillon des gaz est importante, plus la valeur cible réglée est élevée.

6. Procédé pour commander automatiquement une transmission de puissance d'un véhicule selon une des revendications 1 à 5, **caractérisé en ce qu'**un moteur (28) est prévu sur le côté entraînant de l'embrayage à friction (54) et un arbre principal (55) est prévu sur le côté entraîné de l'embrayage à friction (54), et dans lequel, au cours de la commande de changement de vitesses automatique, un nombre de rotations de moteur et un nombre de rotations d'arbre principal sont obtenus, et dans lequel le rapport de réduction de la différence de nombre de rotations d'embrayage est calculé sur la base du nombre de rotations de moteur et du nombre de rotations d'arbre principal.

7. Procédé pour commander automatiquement une transmission de puissance d'un véhicule selon la revendication 6, **caractérisé en ce que** le moteur (28) comprend un vilebrequin (52), et dans lequel un nombre de rotations du vilebrequin (52) du moteur (28) est détecté par un détecteur de nombre de rotations de moteur (53).

8. Dispositif de commande de changement de vitesses automatique comprenant :
un embrayage à friction (54) prévu entre un mécanisme de transmission de puissance de côté entraînant et un mécanisme de transmission de puissance de côté entraîné ; une transmission (80) ;
un dispositif de changement de vitesses automatique comprenant un actionneur entraîné électriquement pour réaliser une marche et un arrêt de l'embrayage à friction (54) et pour un changement de vitesses de la boîte de vitesses (84) ;
un dispositif d'obtention de rapport de réduction pour obtenir une valeur réelle d'un rapport de réduction d'une différence de nombre de rotations d'embrayage définie sur la base d'une différence entre le nombre de rotations de côté entraînant et le nombre de rotations de côté entraîné, le nombre de rotations de côté entraînant étant un nombre de rotations d'une partie de côté entraînant de l'embrayage à friction (54) ou du mécanisme de transmission de puissance de côté entraînant et le nombre de rotations de côté entraîné étant un nombre de rotations d'une partie de côté entraîné de l'embrayage à friction (54) ou du mécanisme de transmission de puissance de côté entraîné ;
**caractérisé par** un dispositif de réglage de vitesse de connexion qui, au cours de la semi-commande d'embrayage, règle la vitesse de connexion pour connecter l'embrayage à friction (54) sur la base de la différence entre une valeur cible du rapport de réduction d'une différence de nombres de rotations du mécanisme de transmission de puissance de côté entraînant et du mécanisme de transmission de puissance de côté entraîné et la valeur réelle d'un rapport de réduction d'une différence de nombres de rotations du mécanisme de transmission de puissance de côté entraînant et du mécanisme de transmission de puissance de côté entraîné, de sorte que la vitesse de connexion pour connecter l'embrayage à friction (54) soit réglée pour que le rapport de réduction de la différence de nombre de rotations d'embrayage se rapproche d'une valeur cible prédéterminée.

9. Dispositif de commande de changement de vitesses automatique selon la revendication 8, **caractérisé en ce que** plus la différence entre la valeur cible et la valeur réelle du rapport de réduction de la différence de nombre de rotations d'embrayage, le rapport de réduction étant obtenu au moyen du dispositif d'obtention de rapport de réduction, est importante, plus la vitesse pour connecter l'embrayage à friction (54) réglée par le dispositif de réglage de vitesse de connexion est importante.

10. Dispositif de commande de changement de vitesses automatique selon la revendication 8 ou 9, **caractérisé par** un dispositif de détection d'ouverture de papillon des gaz (50) pour détecter une ouverture de papillon des gaz, dans lequel la valeur cible est réglée conformément à l'ouverture de papillon des gaz détectée au moyen du dispositif de détection d'ouverture de papillon des gaz (50).

11. Dispositif de commande de changement de vitesses automatique selon la revendication 10, **caractérisé en ce que** plus l'ouverture de papillon des gaz détectée au moyen du dispositif de détection d'ouverture de papillon des gaz (50) est importante, plus la valeur cible réglée est élevée.

12. Dispositif de commande de changement de vitesses automatique selon une des revendications 8 à 11, **caractérisé par** un moteur (28) prévu sur le côté entraînant de l'embrayage à friction (54) et un arbre principal (55) prévu sur le côté entraîné de l'embrayage à friction (54), le dispositif de commande de changements de vitesse automatique comprenant en outre :
un dispositif d'obtention de nombre de rotations de moteur (53) pour obtenir un nombre de rotations de moteur, et
un dispositif d'obtention de nombre de rotations d'arbre principal (56) pour obtenir un nombre de rotations d'arbre principal, dans lequel
le dispositif d'obtention de rapport de réduction calcule le rapport de réduction de la différence de nombre de rotations d'embrayage sur la base du nombre de rotations de moteur obtenu au moyen du dispositif d'obtention de nombre de rotations de moteur (53) et du nombre de rotations d'arbre principal obtenu au moyen du dispositif d'obtention de nombre de rotations d'arbre principal (56).

13. Dispositif de commande de changement de vitesses automatique selon la revendication 12, **caractérisé en ce que** le moteur (28) comprend un vilebrequin (52) et le dispositif d'obtention de nombre de rotations de moteur est un détecteur de nombre de rotations de moteur (53) pour détecter un nombre de rotations du vilebrequin (52) du moteur (28).

14. Dispositif de commande de changement de vitesses automatique selon la revendication 12 ou 13, **caractérisé en ce que** le dispositif d'obtention de nombre de rotations d'arbre principal est un détecteur de nombre de rotations d'arbre principal (56) prévu sur l'arbre principal (55).

15. Dispositif de commande de changement de vitesses automatique selon une des revendications 12 à 14, **caractérisé en ce que** l'arbre principal (55) est connecté à un arbre de transmission (58) par l'intermédiaire de la boîte de vitesses (80) et le dispositif d'obtention de nombre de rotations d'arbre principal comprend un capteur de vitesse de véhicule (69) prévu sur l'arbre de transmission (58) pour calculer un nombre de rotations d'arbre principal sur la base du nombre de rotations d'arbre de transmission détecté au moyen du capteur de vitesse de véhicule (69) et de l'étage de vitesses dans la boîte de vitesses (80).

16. Dispositif de commande de changement de vitesses automatique selon une des revendications 12 à 15, **caractérisé en ce que** le dispositif de commande de changement de vitesses automatique est monté sur un véhicule comprenant une roue motrice, et dans lequel le dispositif d'obtention de nombre de rotations d'arbre principal comprend un détecteur de nombre de rotations de roue motrice pour détecter le nombre de rotations de la roue motrice pour calculer le nombre de rotations d'arbre principal sur la base du nombre de rotations de la roue motrice détecté au moyen du détecteur de nombre de rotations de roue motrice et de l'étage de vitesses dans la boîte de vitesses (80).
